(19) Europäisches Patentamt
European Patent Office
Office européen des brevets

(11) **EP 4 593 483 A1**

(12) **EUROPEAN PATENT APPLICATION**
published in accordance with Art. 153(4) EPC

(43) Date of publication:
**30.07.2025 Bulletin 2025/31**

(21) Application number: **23870833.3**

(22) Date of filing: **26.09.2023**

(51) International Patent Classification (IPC):
**H04W 72/00** (2023.01)   **H04W 72/04** (2023.01)

(52) Cooperative Patent Classification (CPC):
**H04L 5/00; H04W 72/00; H04W 72/04**

(86) International application number:
**PCT/CN2023/121624**

(87) International publication number:
**WO 2024/067605 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.09.2022 CN 202211214461**

(71) Applicant: **Huawei Technologies Co., Ltd.**
**Shenzhen, Guangdong 518129 (CN)**

(72) Inventors:
• **GAN, Linxiao**
**Shenzhen, Guangdong 518129 (CN)**
• **ZHANG, Xu**
**Shenzhen, Guangdong 518129 (CN)**
• **LI, Bo**
**Shenzhen, Guangdong 518129 (CN)**
• **QU, Bingyu**
**Shenzhen, Guangdong 518129 (CN)**
• **GONG, Mingxin**
**Shenzhen, Guangdong 518129 (CN)**

(74) Representative: **Gill Jennings & Every LLP**
**The Broadgate Tower**
**20 Primrose Street**
**London EC2A 2ES (GB)**

(54) **COMMUNICATION METHOD AND COMMUNICATION APPARATUS**

(57)   This application discloses a communication method, including: obtaining a demodulation reference signal port number, where the demodulation reference signal port number is for determining a resource block offset and a resource element offset; determining a resource element of a phase tracking reference signal based on the resource block offset and the resource element offset; and sending or receiving the phase tracking reference signal based on the resource element of the phase tracking reference signal. In the technical solutions of this application, PTRSs corresponding to different DMRS port numbers may be mapped to different resource blocks. This improves a degree of PTRS interference randomization.

FIG. 2

**Description**

This application claims priority to Chinese Patent Application No. 202211214461.X, filed with the China National Intellectual Property Administration on September 30, 2022 and entitled "COMMUNICATION METHOD AND COMMUNICATION APPARATUS", which is incorporated herein by reference in its entirety.

## TECHNICAL FIELD

This application relates to the field of communication technologies, and specifically, to a communication method and a communication apparatus.

## BACKGROUND

In new radio (new radio,NR), a demodulation reference signal (demodulation reference signal, DMRS) and a phase tracking reference signal (phase tracking reference signal, PTRS) can be used in both uplink and downlink to complete channel estimation, phase noise estimation, and data demodulation. The DMRS is used for the channel estimation and the data demodulation, and the PTRS is used for the phase noise estimation.

There is a correspondence between the PTRS and a DMRS port in the NR. Currently, a PTRS corresponding to one DMRS port appears once every two or four resource blocks (resource block, RB). In a corresponding RB, a PTRS corresponding to a DMRS port is mapped to a resource element (resource element, RE) in the RB corresponding to the DMRS port. Therefore, provided that a number of the RE to which the PTRS is mapped is determined, the PTRS can be received or sent.

Currently, both a network device and a terminal device may determine, by using a radio network temporary identifier (radio network temporary identity, RNTI) of the terminal device, an RB to which a PTRS is mapped. However, a quantity of REs in one RB is fixed. When PTRSs corresponding to two different DMRS ports are mapped to a same RE, mutual interference occurs. Consequently, phase noise estimation is affected. Therefore, how to randomize interference of the PTRS becomes an urgent problem to be resolved.

## SUMMARY

This application provides a communication method, to improve a degree of PTRS interference randomization. This application further provides a corresponding communication apparatus, communication system, computer-readable storage medium, computer program product, and the like.

A first aspect of this application provides a communication method. The method may be applied to a communication apparatus, and includes: obtaining a demodulation reference signal port number, where the demodulation reference signal port number is for determining a resource block offset and a resource element offset; determining a resource element of a phase tracking reference signal based on the resource block offset and the resource element offset; and sending or receiving the phase tracking reference signal based on the resource element of the phase tracking reference signal.

In this application, the communication apparatus may be a network device or a terminal device.

In this application, the demodulation reference signal port number (demodulation reference signal, DMRS) in uplink transmission is different from that in downlink transmission. In downlink transmission, the DMRS port number starts from 1000, for example, 1000, 1001, ..., and the like. In uplink transmission, the DMRS port number starts from 0, for example, 0, 1, ..., and the like.

In this application, the resource block offset indicates positions of resource blocks occupied by PTRSs corresponding to DMRS ports with different port numbers in scheduled bandwidth.

In this application, the resource element offset indicates a position of a resource element occupied by a PTRS in a resource block occupied by the PTRS, and the resource element offset is usually represented by 12 integers: 0, 1, 2, ..., and 11.

In the first aspect, the communication apparatus may determine the resource block offset and the resource element offset based on the DMRS port number, and further determine the resource element to which the PTRS is mapped. In this way, PTRSs corresponding to different DMRS port numbers may be mapped to different resource blocks. This improves a degree of PTRS interference randomization.

In a possible implementation, the method further includes: obtaining a radio network temporary identifier of a terminal device, where the demodulation reference signal port number and the radio network temporary identifier are for determining the resource block offset.

In this possible implementation, the resource block offset may be further determined with reference to the radio network temporary identifier, to further improve PTRS interference randomization.

In a possible implementation, the method further includes: obtaining resource element offset indication information, where the demodulation reference signal port number and the resource element offset indication information are for determining the resource element offset.

In this possible implementation, the resource element offset indication information may be represented by Offset 00, Offset 01, Offset 10, and Offset 11, and resource element offsets of different resource element offset indication information corresponding to a same port number are different. PTRS interference randomization may be further improved based on the resource element offset indication information.

In a possible implementation, the method further includes: obtaining a demodulation reference signal configuration type, where the demodulation reference signal port number and the demodulation reference signal configuration type are for determining the resource block offset and the resource element offset.

In this possible implementation, there are usually two demodulation reference signal configuration types: a DMRS configuration type (DMRS configuration type) 1 and a DMRS configuration type 2. Correspondences between DMRS port numbers of different configuration types and resource element offsets are different.

In a possible implementation, the method further includes: obtaining $N_{RB}$ resource blocks used for data transmission and resource block density indication information of the phase tracking reference signal, where $N_{RB}$ is an integer greater than 1, indexes of the $N_{RB}$ resource blocks are 0, 1, ..., and ($N_{RB}$-1), the resource block density indication information indicates resource block density of the phase tracking reference signal, and $N_{RB}$ and the resource block density are for determining the resource block offset.

In this possible implementation, the resource block density indication information may indicate the resource block density, the resource block density may also be referred to as frequency domain density, and a value of the resource block density may be 2 or 4, in other words, a PTRS appears once on every two or four resource blocks. It should be noted that the resource block density indication information may indicate the resource block density in an indirect manner. For example, the network device may notify the terminal device of two bandwidth thresholds. The two thresholds are respectively represented by $N_{RB0}$ and $N_{RB1}$, and $N_{RB0} < N_{RB1}$. If $N_{RB0} \leq N_{RB} < N_{RB1}$, a value of the resource block density is 2. If $N_{RB1} \leq N_{RB1}$ a value of the resource block density is 4. It is clear that the value of the resource block density is not limited in this application. The value of the resource block density may be 2 or 4 described above, or may be another value. It should be noted that a manner of indicating the resource block density is not limited in this application, and the resource block density may be indicated in the indirect manner described above, or may be indicated in another indirect manner, or may be indicated in a direct manner.

In a possible implementation, the method further includes: obtaining $N_{RB}$ resource blocks used for data transmission, where when $N_{RB}=1$, the resource block offset is 0.

In a possible implementation, during downlink transmission, the phase tracking reference signal is a first phase tracking reference signal or a second phase tracking reference signal. The first phase tracking reference signal is a phase tracking reference signal corresponding to a port whose demodulation reference signal configuration type is a first type and whose demodulation reference signal port number is greater than or equal to 1008, or a corresponding phase tracking reference signal whose demodulation reference signal configuration type is a second type and whose demodulation reference signal port number is greater than or equal to 1012. The second phase tracking reference signal is a phase tracking reference signal corresponding to a port whose demodulation reference signal configuration type is the first type and whose demodulation reference signal port number is smaller than 1008, or a phase tracking reference signal corresponding to a port whose demodulation reference signal configuration type is the second type and whose demodulation reference signal port number is smaller than 1012.

In this possible implementation, the DMRS configuration type 1 may be referred to as the first type, and the DMRS configuration type 2 may be referred to as the second type. When the demodulation reference signal configuration type is the first type, the port number greater than or equal to 1008 may include 1008, 1009, 1010, and 1011. When the demodulation reference signal configuration type is the second type, the port number greater than or equal to 1012 may include 1012, 1013, 1014, 1015, 1016, and 1017. It is clear that the port numbers listed herein are not limited in this application, and both the first type and the second type may have other port numbers. When the demodulation reference signal configuration type is the first type, the port number smaller than 1008 may include 1000, 1001, 1002, 1003, 1004, 1005, 1006, and 1007. When the demodulation reference signal configuration type is the second type, the port number smaller than 1012 may include 1000, 1001, 1002, 1003, 1004, 1005, 1006, 1007, 1008, 1009, 1010, and 1011.

In this application, during downlink transmission, the first-type port number that is smaller than 1008 may be understood as an original first-type DMRS port number, and a first-type port number that is greater than or equal to 1008 may be understood as a newly expanded first-type DMRS port number. The second-type port number that is smaller than 1012 may be understood as an original second-type DMRS port number. The second-type port number that is greater than or equal to 1012 may be understood as a newly expanded DMRS port number of the second type.

In a possible implementation, during uplink transmission, the phase tracking reference signal is a first phase tracking reference signal or a second phase tracking reference signal. The first phase tracking reference signal is a phase tracking reference signal corresponding to a port whose demodulation reference signal configuration type is a first type and whose demodulation reference signal port number is greater than or equal to 8, or a phase tracking reference signal corresponding to a port whose demodulation reference signal configuration type is a second type and whose demodulation reference signal port number is greater than or equal to 12. The second phase tracking reference signal is a phase tracking reference signal corresponding to a port whose demodulation reference signal configuration type is the first type and whose demodulation reference signal port number is smaller than 8, or a phase tracking reference signal corresponding to a port whose demodulation reference signal configuration type is the second type and whose demodulation reference signal port number is smaller than 12.

In this possible implementation, the DMRS configuration type 1 may be referred to as the first type, and the DMRS configuration type 2 may be referred to as the second type. When the demodulation reference signal configuration type is the first type, the port number greater than or equal to 8 may include 8, 9, 10, and 11. When the demodulation reference signal configuration type is the second type, the port number greater than or equal to 12 may include 12, 13, 14, 15, 16, and 17. It is clear that the port numbers listed herein are not limited in this application, and both the first type and the second type may have other port numbers. When the demodulation reference signal configuration type is the first type, the port number smaller than 8 may include 0, 1, 2, 3, 4, 5, 6, and 7. When the demodulation reference signal configuration type is the second type, the port number smaller than 12 may include 0, 1, 2, 3, 4, 5, 6, 7, 8, 9, 10, and 11.

In this application, during uplink transmission, the first-type port number that is smaller than 8 may be understood as an original first-type DMRS port number, and the first-type port number that is greater than or equal to 8 may be understood as a newly expanded first-type DMRS port number. The second-type port number that is smaller than 12 may be understood as an original second-type DMRS port number. The second-type port number that is greater than or equal to 12 may be understood as a newly expanded second-type DMRS port number.

In a possible implementation, the resource block offset includes a first offset parameter and a second offset parameter, where the first offset parameter and the second offset parameter are for determining a resource element of the first phase tracking reference signal and a resource element of the second phase tracking reference signal.

In this possible implementation, the resource block offset may include two parameters, and the first offset parameter is determined based on a quantity of resource blocks, the radio network temporary identifier, and the resource block density.

In a possible implementation, the foregoing step of determining a resource element of a phase tracking reference signal based on the resource block offset and the resource element offset includes: determining the resource element of the first phase tracking reference signal and/or the resource element of the second phase tracking reference signal by using a first relational expression, where the first relational expression is:

$$k = k_{ref}^{RE} + (iK_{PT-RS} + k_{ref}^{RB} + k_{offset}^{RB})N_{RB}^{SC}.$$

k is an index of the resource element of the first phase tracking reference signal and/or an index of the resource element of the second phase tracking reference signal, i is a natural number, $N_{RB}^{SC}$ is a quantity of subcarriers in one resource block, $K_{PT-RS}$ is the resource block density, $k_{ref}^{RB}$ is the first offset parameter, $k_{offset}^{RB}$ is the second offset parameter, and $k_{ref}^{RE}$ is the resource element offset, where

$$k_{ref}^{RB} = \begin{cases} n_{RNTI} \ mod \ K_{PT-RS}, if \ N_{RB} \ mod \ K_{PT-RS} = 0 \\ n_{RNTI} \ mod \ (N_{RB} \ mod \ K_{PT-RS}), otherwise \end{cases}.$$

$n_{RNTI}$ is the radio network temporary identifier, *mod* represents a modulo operation, and $N_{RB}$ is the quantity of the resource blocks.

In this possible implementation, during downlink transmission or uplink transmission, for both the original DMRS port number and the newly expanded DMRS port number, k may be determined by using the first relational expression, and then the first phase tracking reference signal and/or the second phase tracking reference signal are/is correctly received.

In a possible implementation, when $K_{PT-RS}$ = 2, if $k_{ref}^{RB} = 0$, $k_{offset}^{RB} = 1$; and if $k_{ref}^{RB} = 1$, $k_{offset}^{RB} = -1$; when $K_{PT-RS}$ = 4, if $k_{ref}^{RB} = 0$ or 1, $k_{offset}^{RB} = 2$; and if $k_{ref}^{RB} = 2$ or 3, $k_{offset}^{RB} = -2$; and k is the index of the resource element of the first phase tracking reference signal.

In a possible implementation, $k_{offset}^{RB} = 0$, and $k$ is the index of the resource element of the second phase tracking reference signal.

In a possible implementation, when the resource block density is equal to 2, and $N_{RB}$ is an odd number, the second offset parameter is 1, where that the second offset parameter is 1 indicates that an index of a resource block to which the resource element of the first phase tracking reference signal belongs is 2M+1, and indicates that an index of a resource block to which the resource element of the second phase tracking reference signal belongs is 2M, where M≥0, and M is an integer.

In this possible implementation, $k_{offset}^{RB} = 1$, the first phase tracking reference signal may occupy resource blocks whose indexes are 1, 3, 5, 7, 9, ..., and ($N_{RB}$ - 2), and the second phase tracking reference signal may occupy resource blocks whose indexes are 0, 2, 4, 6, 8, ..., and ($N_{RB}$ - 1).

In a possible implementation, when the resource block density is equal to 2, $N_{RB}$ is an even number, and the radio network temporary identifier is an odd number, the second offset parameter is -1, where that the second offset parameter is -1 indicates that an index of a resource block to which the resource element of the first phase tracking reference signal belongs is 2M, and indicates that an index of a resource block to which the resource element of the second phase tracking reference signal belongs is 2M+1, where M≥0, and M is an integer.

In this possible implementation, $k_{offset}^{RB} = -1$, the first phase tracking reference signal may occupy resource blocks whose indexes are 0, 2, 4, 6, 8, ..., and (), and the second phase tracking reference signal may occupy resource blocks whose indexes are 1, 3, 5, 7, 9, ...., and ($N_{RB}$ - 1).

In a possible implementation, when the resource block density is equal to 2, $N_{RB}$ is an even number, and the radio network temporary identifier is an even number, the second offset parameter is 1, where that the second offset parameter is 1 indicates that an index of a resource block to which the resource element of the first phase tracking reference signal belongs is 2M+1, and indicates that an index of a resource block to which the resource element of the second phase tracking reference signal belongs is 2M, where M≥0, and M is an integer.

In this possible implementation, $k_{offset}^{RB} = 1$, the first phase tracking reference signal may occupy resource blocks whose indexes are 1, 3, 5, 7, 9, ..., and (), and the second phase tracking reference signal may occupy resource blocks whose indexes are 0, 2, 4, 6, 8, ..., and ($N_{RB}$ - 2).

In a possible implementation, when the resource block density is equal to 4, $N_{RB}$ is an integer multiple of 4, and the radio network temporary identifier is a multiple of 4, the second offset parameter is 2, where that the second offset parameter is 2 indicates that an index of a resource block to which the resource element of the first phase tracking reference signal belongs is 4M+2, and indicates that an index of a resource block to which the resource element of the second phase tracking reference signal belongs is 4M, where M≥0, and M is an integer.

In this possible implementation, $k_{offset}^{RB} = 2$, the first phase tracking reference signal may occupy resource blocks whose indexes are 2, 6, 10, ..., and (), and the second phase tracking reference signal may occupy resource blocks whose indexes are 0, 4, 8, ...., and ($N_{RB}$ - 4).

In a possible implementation, when the resource block density is equal to 4, $N_{RB}$ is an integer multiple of 4, and a modulus of the radio network temporary identifier that is set to 4 is 1, the second offset parameter is 2, where that the second offset parameter is 2 indicates that an index of a resource block to which the resource element of the first phase tracking reference signal belongs is 4M+3, and indicates that an index of a resource block to which the resource element of the second phase tracking reference signal belongs is 4M+1, where M≥0, and M is an integer.

In this possible implementation, $k_{offset}^{RB} = 2$, the first phase tracking reference signal may occupy resource blocks whose indexes are 3, 7, 11, ..., and ($N_{RB}$ - 1), and the second phase tracking reference signal may occupy resource blocks whose indexes are 1, 5, 9, ...., and ($N_{RB}$ - 3).

In a possible implementation, when the resource block density is equal to 4, $N_{RB}$ is an integer multiple of 4, and a modulus of the radio network temporary identifier that is set to 4 is 2, the second offset parameter is -2, where that the second offset parameter is -2 indicates that an index of a resource block to which the resource element of the first phase tracking reference signal belongs is 4M, and indicates that an index of a resource block to which the resource element of the second phase tracking reference signal belongs is 4M+2, where M≥0, and M is an integer.

In this possible implementation, $k_{offset}^{RB} = -2$, the first phase tracking reference signal may occupy resource blocks whose indexes are 0, 4, 8, ..., and ($N_{RB}$ - 4), and the second phase tracking reference signal may occupy resource blocks whose indexes are 2, 6, 10, ...., and ($N_{RB}$ - 2).

In a possible implementation, when the resource block density is equal to 4, $N_{RB}$ is an integer multiple of 4, and a modulus of the radio network temporary identifier that is set to 4 is 3, the second offset parameter is -2, where that the second offset parameter is -2 indicates that an index of a resource block to which the resource element of the first phase tracking reference signal belongs is 4M+1, and indicates that an index of a resource block to which the resource element of the second phase tracking reference signal belongs is 4M+3, where M≥0, and M is an integer.

In this possible implementation, $k_{offset}^{RB} = -2$, the first phase tracking reference signal may occupy resource blocks whose indexes are 1, 5, 9, ..., and ($N_{RB}$ - 3), and the second phase tracking reference signal may occupy resource blocks whose indexes are 3, 7, 11, ...., and ($N_{RB}$ - 1).

In a possible implementation, when the resource block density is equal to 4, and a modulus of $N_{RB}$ that is set to 4 is 1, the second offset parameter is 2, where that the second offset parameter is 2 indicates that an index of a resource block to which the resource element of the first phase tracking reference signal belongs is 4M+2, and indicates that an index of a resource block to which the resource element of the second phase tracking reference signal belongs is 4M, where M≥0, and M is an integer.

In this possible implementation, $k_{offset}^{RB} = 2$, the first phase tracking reference signal may occupy resource blocks whose indexes are 2, 6, 10, ..., and ($N_{RB}$ - 3), and the second phase tracking reference signal may occupy resource blocks whose indexes are 0, 4, 8, ...., and ($N_{RB}$ - 1).

In a possible implementation, when the resource block density is equal to 4, a modulus of $N_{RB}$ that is set to 4 is 2, and the radio network temporary identifier is an even number, the second offset parameter is 2, where that the second offset parameter is 2 indicates that an index of a resource block to which the resource element of the first phase tracking reference signal belongs is 4M+2, and indicates that an index of a resource block to which the resource element of the second phase tracking reference signal belongs is 4M, where M≥0, and M is an integer.

In this possible implementation, $k_{offset}^{RB} = 2$, the first phase tracking reference signal may occupy resource blocks whose indexes are 2, 6, 10, ..., and ($N_{RB}$ - 4), and the second phase tracking reference signal may occupy resource blocks whose indexes are 0, 4, 8, ...., and ($N_{RB}$ - 2).

In a possible implementation, when the resource block density is equal to 4, a modulus of $N_{RB}$ that is set to 4 is 2, and the radio network temporary identifier is an odd number, the second offset parameter is 2, where that the second offset parameter is 2 indicates that an index of a resource block to which the resource element of the first phase tracking reference signal belongs is 4M+3, and indicates that an index of a resource block to which the resource element of the second phase tracking reference signal belongs is 4M+1, where M≥0, and M is an integer.

In this possible implementation, $k_{offset}^{RB} = 2$, the first phase tracking reference signal may occupy resource blocks whose indexes are 3, 7, 11, ..., and ($N_{RB}$ - 3), and the second phase tracking reference signal may occupy resource blocks whose indexes are 1, 5, 9, ...., and ($N_{RB}$ - 1).

In a possible implementation, when the resource block density is equal to 4, a modulus of $N_{RB}$ that is set to 4 is 3, and a modulus of the radio network temporary identifier that is set to 3 is 0, the second offset parameter is 2, where that the second offset parameter is 2 indicates that an index of a resource block to which the resource element of the first phase tracking reference signal belongs is 4M+2, and indicates that an index of a resource block to which the resource element of the second phase tracking reference signal belongs is 4M, where M≥0, and M is an integer.

In this possible implementation, $k_{offset}^{RB} = 2$, the first phase tracking reference signal may occupy resource blocks whose indexes are 2, 6, 10, ..., and ($N_{RB}$ - 1), and the second phase tracking reference signal may occupy resource blocks whose indexes are 0, 4, 8, ...., and ($N_{RB}$ - 3).

In a possible implementation, when the resource block density is equal to 4, a modulus of $N_{RB}$ that is set to 4 is 3, and a modulus of the radio network temporary identifier that is set to 3 is 1, the second offset parameter is 2, where that the second offset parameter is 2 indicates that an index of a resource block to which the resource element of the first phase tracking reference signal belongs is 4M+3, and indicates that an index of a resource block to which the resource element of the second phase tracking reference signal belongs is 4M+1, where M≥0, and M is an integer.

In this possible implementation, $k_{offset}^{RB} = 2$, the first phase tracking reference signal may occupy resource blocks whose indexes are 3, 7, 11, ..., and ($N_{RB}$ - 4), and the second phase tracking reference signal may occupy resource blocks whose indexes are 1, 5, 9, ...., and ($N_{RB}$ - 2).

In a possible implementation, when the resource block density is equal to 4, a modulus of $N_{RB}$ that is set to 4 is 3, and a modulus of the radio network temporary identifier that is set to 3 is 2, the second offset parameter is -2, where that the second offset parameter is -2 indicates that an index of a resource block to which the resource element of the first phase tracking reference signal belongs is 4M, and indicates that an index of a resource block to which the resource element of the second phase tracking reference signal belongs is 4M+2, where M≥0, and M is an integer.

In this possible implementation, $k_{offset}^{RB} = -2$, the first phase tracking reference signal may occupy resource blocks whose indexes are 0, 4, 8, ..., and ($N_{RB}$ - 3), and the second phase tracking reference signal may occupy resource blocks whose indexes are 2, 6, 10, ...., and ($N_{RB}$ - 1).

In a possible implementation, the foregoing step of determining a resource element of a phase tracking reference signal based on the resource block offset and the resource element offset includes: determining a resource element of the first phase tracking reference signal by using a second relational expression, where the second relational expression is:

$$k = k_{ref}^{RE} + \left(iK_{PT-RS} + k_{ref}^{RB}\right)N_{RB}^{SC}.$$

k is an index of the resource element of the first phase tracking reference signal, $i$ is a natural number, $N_{RB}^{SC}$ is a quantity of subcarriers in one resource block, $K_{PT\text{-}RS}$ is the resource block density, $k_{ref}^{RB}$ is the resource block offset, and $k_{ref}^{RE}$ is the resource element offset.

If $K_{PT\text{-}RS}$ = 2,

$$k_{ref}^{RB} = \begin{cases} 0, if N_{RB} \bmod 2 = 0 \text{ and } n_{RNTI} \bmod 2 = 1 \\ 1, otherwise \end{cases}.$$

If $K_{PT\text{-}RS}$ = 4 and $N_{RB}$ mod 4 = 0,

$$k_{ref}^{RB} = \begin{cases} 2, if n_{RNTI} \bmod 4 = 0 \\ 3, if n_{RNTI} \bmod 4 = 1 \\ 0, if n_{RNTI} \bmod 4 = 2 \\ 1, if n_{RNTI} \bmod 4 = 3 \end{cases}.$$

If $K_{PT\text{-}RS}$ = 4 and $N_{RB}$ mod 4 = 1,

$$k_{ref}^{RB} = 2.$$

If $K_{PT\text{-}RS}$ = 4 and $N_{RB}$ mod 4 = 2,

$$k_{ref}^{RB} = \begin{cases} 2, if n_{RNTI} \bmod 2 = 0 \\ 3, if n_{RNTI} \bmod 2 = 1 \end{cases}.$$

If $K_{PT\text{-}RS}$ = 4 and $N_{RB}$ mod 4 = 3,

$$k_{ref}^{RB} = \begin{cases} 2, if n_{RNTI} \bmod 3 = 0 \\ 3, if n_{RNTI} \bmod 3 = 1 \\ 0, if n_{RNTI} \bmod 3 = 2 \end{cases}.$$

$n_{RNTI}$ is the radio network temporary identifier, *mod* represents a modulo operation, and $N_{RB}$ is the quantity of the resource blocks.

In this possible implementation, for the newly expanded DMRS port number, *k* may be determined by using the second relational expression, and then the first phase tracking reference signal is correctly received.

In a possible implementation, when the resource block density is equal to 2, and $N_{RB}$ is an odd number, the resource block offset is 1, where that the resource block offset is 1 indicates that an index of a resource block to which the resource element of the first phase tracking reference signal belongs is 2M+1, where M≥0, and M is an integer.

In this possible implementation, $k_{ref}^{RB} = 1$, and the first phase tracking reference signal may occupy resource blocks whose indexes are 1, 3, 5, 7, 9, ..., and ($N_{RB}$ - 2).

In a possible implementation, when the resource block density is equal to 2, $N_{RB}$ is an even number, and the radio network temporary identifier is an even number, the resource block offset is 1, where that the resource block offset is 1 indicates that an index of a resource block to which the resource element of the first phase tracking reference signal belongs is 2M+1, where M≥0, and M is an integer.

In this possible implementation, $k_{ref}^{RB} = 1$, and the first phase tracking reference signal may occupy resource blocks whose indexes are 1, 3, 5, 7, 9, ..., and ($N_{RB}$ - 1).

In a possible implementation, when the resource block density is equal to 2, $N_{RB}$ is an even number, and the radio network temporary identifier is an odd number, the resource block offset is 0, where that the resource block offset is 0 indicates that an index of a resource block to which the first phase tracking reference signal belongs is 2M, where M≥0, and M is an integer.

In this possible implementation, $k_{ref}^{RB} = 0$, and the first phase tracking reference signal may occupy resource blocks whose indexes are 0, 2, 4, 6, 8, ..., and ($N_{RB}$ - 2).

In a possible implementation, when the resource block density indication information is equal to 4, $N_{RB}$ is an integer multiple of 4, and the radio network temporary identifier is a multiple of 4, the resource block offset is 2, where that the resource block offset is 2 indicates that an index of a resource block to which the resource element of the first phase tracking reference signal belongs is 4M+2, where M≥0, and M is an integer.

In this possible implementation, $k_{ref}^{RB} = 2$, and the first phase tracking reference signal may occupy resource blocks whose indexes are 2, 6, 10, ..., and ($N_{RB}$ - 2).

In a possible implementation, when the resource block density indication information is equal to 4, $N_{RB}$ is an integer multiple of 4, and a modulus of the radio network temporary identifier that is set to 4 is 1, the resource block offset is 3, where that the resource block offset is 3 indicates that an index of a resource block to which the resource element of the first phase tracking reference signal belongs is 4M+3, where M≥0, and M is an integer.

In this possible implementation, $k_{ref}^{RB} = 3$, and the first phase tracking reference signal may occupy resource blocks whose indexes are 3, 7, 11, ..., and ($N_{RB}$ - 1).

In a possible implementation, when the resource block density indication information is equal to 4, $N_{RB}$ is an integer multiple of 4, and a modulus of the radio network temporary identifier that is set to 4 is 2, the resource block offset is 0, where that the resource block offset is 0 indicates that an index of a resource block to which the first phase tracking reference signal belongs is 4M, where M≥0, and M is an integer.

In this possible implementation, $k_{ref}^{RB} = 0$, and the first phase tracking reference signal may occupy resource blocks whose indexes are 0, 4, 8, ...., and ($N_{RB}$ - 4).

In a possible implementation, when the resource block density indication information is equal to 4, $N_{RB}$ is an integer multiple of 4, a modulus of the radio network temporary identifier that is set to 4 is 3, the resource block offset is 1, where that the resource block offset is 1 indicates that an index of a resource block to which the resource element of the first phase tracking reference signal belongs is 4M+1, where M≥0, and M is an integer.

In this possible implementation, $k_{ref}^{RB} = 1$, and the first phase tracking reference signal may occupy resource blocks whose indexes are 1, 5, 9, ...., and ($N_{RB}$ - 3).

In a possible implementation, when the resource block density indication information is equal to 4, and a modulus of $N_{RB}$ that is set to 4 is 1, the resource block offset is 2, where that the resource block offset is 2 indicates that an index of a resource block to which the resource element of the first phase tracking reference signal belongs is 4M+2, where M≥0, and M is an integer.

In this possible implementation, $k_{ref}^{RB} = 2$, and the first phase tracking reference signal may occupy resource blocks whose indexes are 2, 6, 10, ..., and ($N_{RB}$ - 3).

In a possible implementation, when the resource block density indication information is equal to 4, a modulus of $N_{RB}$ that is set to 4 is 2, and the radio network temporary identifier is an even number, the resource block offset is 2, where that the resource block offset is 2 indicates that an index of a resource block to which the resource element of the first phase tracking reference signal belongs is 4M+2, where M≥0, and M is an integer.

In this possible implementation, $k_{ref}^{RB} = 2$, and the first phase tracking reference signal may occupy resource blocks whose indexes are 2, 6, 10, ..., and ($N_{RB}$ - 4).

In a possible implementation, when the resource block density indication information is equal to 4, and a modulus of $N_{RB}$ that is set to 4 is 2, the radio network temporary identifier is an odd number, the resource block offset is 3, where that the resource block offset is 3 indicates that an index of a resource block to which the resource element of the first phase tracking reference signal belongs is 4M+3, where M≥0, and M is an integer.

In this possible implementation, $k_{ref}^{RB} = 3$, and the first phase tracking reference signal may occupy resource blocks whose indexes are 3, 7, 11, ..., and ($N_{RB}$ - 3).

In a possible implementation, when the resource block density indication information is equal to 4, a modulus of $N_{RB}$ that is set to 4 is 3, and the radio network temporary identifier is an integer multiple of 3, the resource block offset is 2, where that the resource block offset is 2 indicates that an index of a resource block to which the resource element of the first phase tracking reference signal belongs is 4M+2, where M≥0, and M is an integer.

In this possible implementation, $k_{ref}^{RB} = 2$, and the first phase tracking reference signal may occupy resource blocks whose indexes are 2, 6, 10, ..., and ($N_{RB}$ - 1).

In a possible implementation, when the resource block density indication information is equal to 4, a modulus of $N_{RB}$ that is set to 4 is 3, and a modulus of the radio network temporary identifier that is set to 3 is 1, the resource block offset is 3, where that the resource block offset is 3 indicates that an index of a resource block to which the resource element of the first phase tracking reference signal belongs is 4M+3, where M≥0, and M is an integer.

In this possible implementation, $k_{ref}^{RB} = 3$, and the first phase tracking reference signal may occupy resource blocks whose indexes are 3, 7, 11, ..., and ($N_{RB}$ - 4).

In a possible implementation, when the resource block density indication information is equal to 4, a modulus of $N_{RB}$ that is set to 4 is 3, and a modulus of the radio network temporary identifier that is set to 3 is 2, the resource block offset is 0, where that the resource block offset is 0 indicates that an index of a resource block to which the first phase tracking reference signal belongs is 4M, where M≥0, and M is an integer.

In this possible implementation, $k_{ref}^{RB} = 0$, and the first phase tracking reference signal may occupy resource blocks whose indexes are 0, 4, 8, ..., and ($N_{RB}$ - 3).

In a possible implementation, resource element offsets of a first-type demodulation reference signal port number in downlink transmission in different resource element offset indication information may be values 0 to 11 in the following table.

| Demodulation reference signal port number | Resource element offset indication information | | | |
|---|---|---|---|---|
| | Offset 00 | Offset 01 | Offset 10 | Offset 11 |
| 1008 | 4 | 6 | 10 | 0 |
| 1009 | 6 | 8 | 0 | 2 |
| 1010 | 5 | 7 | 11 | 1 |
| 1011 | 7 | 9 | 1 | 3 |

Offset 00, Offset 01, Offset 10, and Offset 11 are all resource element offset indication information, and 1008, 1009, 1010, and 1011 are four first-type demodulation reference signal port numbers.

In a possible implementation, resource element offsets of a second-type demodulation reference signal port number in downlink transmission in different resource element offset indication information may be values 0 to 11 in the following table.

| Demodulation reference signal port number | Resource element offset indication information | | | |
|---|---|---|---|---|
| | Offset 00 | Offset 01 | Offset 10 | Offset 11 |
| 1012 | 6 | 7 | 0 | 1 |

(continued)

| Demodulation reference signal port number | Resource element offset indication information | | | |
|---|---|---|---|---|
| | Offset 00 | Offset 01 | Offset 10 | Offset 11 |
| 1013 | 7 | 0 | 1 | 6 |
| 1014 | 8 | 9 | 2 | 3 |
| 1015 | 9 | 2 | 3 | 8 |
| 1016 | 10 | 11 | 4 | 5 |
| 1017 | 11 | 4 | 5 | 10 |

Offset 00, Offset 01, Offset 10, and Offset 11 are all resource element offset indication information, and 1012, 1013, 1014, 1015, 1016, and 1017 are six second-type demodulation reference signal port numbers.

In a possible implementation, resource element offsets of a first-type demodulation reference signal port number in uplink transmission in different resource element offset indication information may be values 0 to 11 in the following table.

| Demodulation reference signal port number | Resource element offset indication information | | | |
|---|---|---|---|---|
| | Offset 00 | Offset 01 | Offset 10 | Offset 11 |
| 8 | 4 | 6 | 10 | 0 |
| 9 | 6 | 8 | 0 | 2 |
| 10 | 5 | 7 | 11 | 1 |
| 11 | 7 | 9 | 1 | 3 |

Offset 00, Offset 01, Offset 10, and Offset 11 are all resource element offset indication information, and 8, 9, 10, and 11 are four first-type demodulation reference signal port numbers.

In a possible implementation, resource element offsets of a second-type demodulation reference signal port number in uplink transmission in different resource element offset indication information may be values 0 to 11 in the following table.

| Demodulation reference signal port number | Resource element offset indication information | | | |
|---|---|---|---|---|
| | Offset 00 | Offset 01 | Offset 10 | Offset 11 |
| 12 | 6 | 7 | 0 | 1 |
| 13 | 7 | 0 | 1 | 6 |
| 14 | 8 | 9 | 2 | 3 |
| 15 | 9 | 2 | 3 | 8 |
| 16 | 10 | 11 | 4 | 5 |
| 17 | 11 | 4 | 5 | 10 |

Offset 00, Offset 01, Offset 10, and Offset 11 are all resource element offset indication information, and 12, 13, 14, 15, 16, and 17 are six second-type demodulation reference signal port numbers.

It should be noted that the foregoing tables of resource element offsets for downlink transmission and uplink transmission are merely an example, and a value of a resource element offset corresponding to a same port number and same resource element offset indication information may alternatively be another value.

A second aspect of this application provides a communication apparatus. The communication apparatus includes a transceiver module and a processing module, the transceiver module is configured to perform a receiving/-sending operation in the method according to any one of the first aspect or the possible implementations of the first aspect, and the processing module is configured to perform a processing operation in the method according to any one of the first aspect or the possible implementations of the first aspect.

A third aspect of this application provides a communication apparatus. The communication apparatus includes a processor, a memory, and a transceiver. The memory stores a computer program or computer instructions. The processor is configured to invoke and run the computer program or the computer instructions stored in the memory, so that the processor implements the processing operation according to any one of the first aspect or the possible implementations of the first aspect. The transceiver is configured to receive and send a signal, for example, implement the receiving and sending operation according to any one of the first aspect or the possible implementations of the first aspect.

A fourth aspect of this application provides a communication apparatus. The communication apparatus includes a processor, and the processor is configured to perform any one of the first aspect or the possible implementations of the first aspect.

The communication apparatus in the second aspect to the fourth aspect of this application may be a terminal device, or may be a chip in a terminal device. The communication apparatus may include a processing module and a transceiver module. When the communication apparatus is the terminal device, the processing module may be a processor, and the transceiver module may be a transceiver. The terminal device may further include a storage module, and the storage module may be a memory. The storage module is configured to store instructions, and the processing module executes the instructions stored in the storage module, so that the terminal device performs the method according to any one of the first aspect or the possible implementations of the first aspect. When the communication apparatus is the chip in a terminal device, the processing module may be a processor, and the transceiver module may be an input/output interface, a pin a circuit, or the like. The processing module executes instructions stored in a storage module, so that the terminal device performs the method according to any one of the first aspect or the possible implementations of the first aspect. The storage module may be a storage module (for example, a register or a cache) in the chip, or may be a storage module (for example, a read-only memory or a random access memory) that is in the terminal device and that is located outside the chip.

The communication apparatus in the second aspect to the fourth aspect of this application may be a network device, or may be a chip in a network device. The communication apparatus may include a processing module and a transceiver module. When the communication apparatus is the network device, the processing module may be a processor, and the transceiver module may be a transceiver. The network device may further include a storage module, and the storage module may be a memory. The storage module is configured to store instructions, and the processing module executes the instructions stored in the storage module, so that the network device performs the method according to any one of the first aspect or the possible implementations of the first aspect. When the communication apparatus is the chip in a network device, the processing module may be a processor, and the transceiver module may be an input/output interface, a pin, a circuit, or the like. The processing module executes instructions stored in a storage module, so that the network device performs the method according to any one of the first aspect or the possible implementations of the first aspect. The storage module may be a storage module (for example, a register or a cache) in the chip, or may be a storage module (for example, a read-only memory or a random access memory) that is in the network device and that is located outside the chip.

A fifth aspect of this application provides a computer program product including instructions. When the computer program product runs on a computer, the computer is enabled to perform any one of the first aspect or the possible implementations of the first aspect.

A sixth aspect of this application provides a computer-readable storage medium including computer instructions. When the instructions are run on a computer, the computer is enabled to perform any one of the first aspect or the possible implementations of the first aspect.

A seventh aspect of this application provides a chip apparatus including a processor configured to invoke a computer program or computer instructions in a memory, to enable the processor to perform any one of the first aspect or the possible implementations of the first aspect.

Optionally, the processor is coupled to the memory through an interface.

An eighth aspect of this application provides a communication system. The communication system includes a terminal device and a network device. The network device is configured to perform content related to the network device in the method according to any one of the first aspect or the possible implementations of the first aspect. The terminal device is configured to perform content related to the terminal device in the method according to any one of the first aspect or the possible implementations of the first aspect.

For beneficial effects according to the second aspect to the eighth aspect and the possible implementations of the second aspect to the eighth aspect, refer to corresponding descriptions according to the first aspect and the possible implementations of the first aspect for understanding. Details are not described herein again.

## BRIEF DESCRIPTION OF DRAWINGS

FIG. 1 is an architectural diagram of a communication system according to an embodiment of this application;

FIG. 2 is a diagram of an embodiment of a communication method according to an embodiment of this application;

FIG. 3A to FIG. 3D are diagrams of examples of resource blocks occupied by phase tracking reference signals under different resource element offset indications;

FIG. 4 is a diagram of another example of resource blocks occupied by phase tracking reference signals;

FIG. 5 is a diagram of another example of resource blocks occupied by a phase tracking reference signal;

FIG. 6 is a diagram of another example of resource blocks occupied by a phase tracking reference signal;

FIG. 7A to FIG. 7D are diagrams of several examples of resource blocks occupied by phase tracking reference signals;

FIG. 8 is a diagram of a structure of a communication apparatus according to an embodiment of this application;

FIG. 9 is a diagram of another structure of a communication apparatus according to an embodiment of this application;

FIG. 10 is a diagram of another structure of a communication apparatus according to an embodiment of this application;

FIG. 11 is a diagram of another structure of a communication apparatus according to an embodiment of this application; and

FIG. 12 is a diagram of another structure of a communication apparatus according to an embodiment of this application.

## DESCRIPTION OF EMBODIMENTS

The following describes embodiments of this application with reference to the accompanying drawings. It is clear that the described embodiments are merely some rather than all of embodiments of this application. A person of ordinary skill in the art may know that with development of technologies and emergence of new scenarios, the technical solutions provided in embodiments of this application are also applicable to resolving similar technical problems.

In the specification, claims, and accompanying drawings of this application, the terms "first", "second", and so on are intended to distinguish between similar objects but do not necessarily indicate a specific order or sequence. It should be understood that the data termed in such a way are interchangeable in proper circumstances so that embodiments of the present invention described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

An embodiment of this application provides a communication method, to improve a degree of PTRS interference randomization. This application further provides a corresponding communication apparatus, communication system, computer-readable storage medium, computer program product, and the like. Details are separately described below.

The technical solutions in embodiments of this application may be applied to various communication systems, for example, a 5th generation (5th generation, 5G) system or a new radio (new radio, NR) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a mobile communication system after a 5G network (for example, a 6G mobile communication system), and a vehicle to everything (vehicle to everything, V2X) communication system.

For ease of understanding, the following first describes a system architecture and an application scenario of the communication method provided in embodiments of this application.

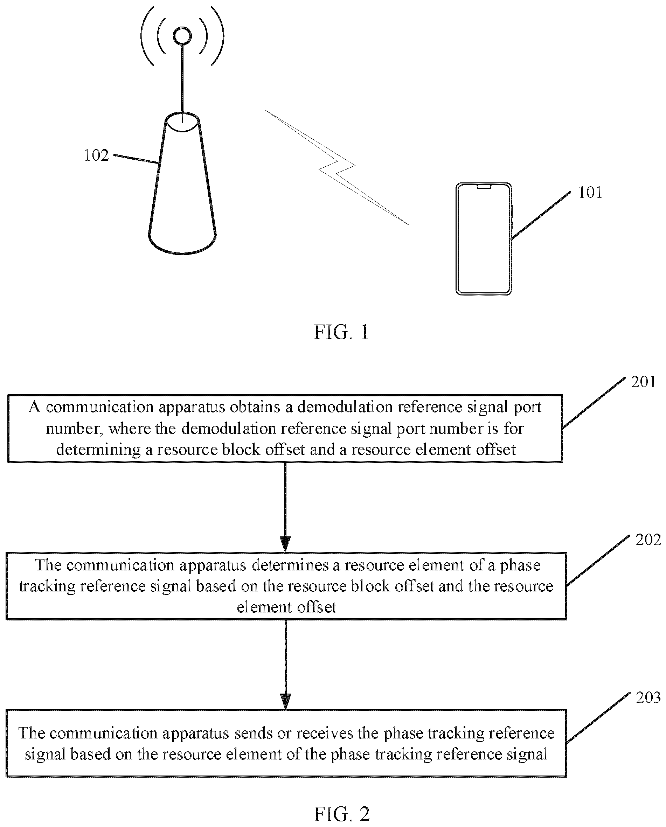

The solutions provided in embodiments of this application may be based on a new radio technology, also referred to as a 5G technology, or may be based on a subsequent evolved access standard. This is not specifically limited herein. In this embodiment and subsequent embodiments, only a 5G-based communication system is used as an example for description. As shown in FIG. 1, the communication system includes a terminal device 101 and a network device 102. The terminal device 101 may receive configuration of the network device 102, determine a resource element (resource element, RE) of a phase tracking reference signal (phase tracking reference signal, PTRS) based on the configuration of the network device 102, and send or receive the phase tracking reference signal based on the resource element of the phase tracking reference signal.

In an implementation, the communication method may be applied to a 5G-based vehicle to everything (vehicle to everything, V2X) system, that is, a system in which vehicle information is provided by using a sensor, a vehicle-mounted terminal device, or the like loaded on a vehicle, to implement communication between the vehicle and another device. In the vehicle to everything system, communication can be implemented between vehicle to vehicle (vehicle to vehicle, V2V), vehicle to infrastructure (vehicle to infrastructure, V2I), vehicle to network (vehicle to network, V2N), and vehicle to pedestrian (vehicle to pedestrian, V2P). When the terminal device 101 is a terminal in the vehicle to everything, the terminal device 101 may send or receive the phase tracking reference signal based on the configuration of the network device 102.

In another implementation, the communication method may be applied to a 5G-based internet of things (internet of things, IoT) system, for example, may be based on a narrowband internet of things (narrowband internet of things, NB-IoT) standard or an enhanced machine type communication (enhanced machine type communication, eMTC) standard. This is not specifically limited herein. In the system, both an NB-IoT terminal and an eMTC terminal are terminal devices with low power, and may perform data connection in a low-power wide-area network (low-power wide-area network, LPWAN), and implement data transmission between the foregoing terminal devices with low power or data transmission between the foregoing terminal devices with low power and the network device. Therefore, when the terminal device 101 is the NB-IoT terminal or the eMTC terminal, the terminal device 101 may send or receive the phase tracking reference signal based on the configuration of the network device 102.

It should be understood that, in addition to the foregoing scenarios, the communication method in embodiments of this application may be further applicable to another scenario. This is not specifically limited herein.

In this embodiment of this application, the terminal device 101 includes a device that provides a user with voice and/or data connectivity, for example, a handheld device with a wireless connection function, or a processing device connected to a wireless modem. The terminal device 101 may communicate with a core network through a radio access network (radio access network, RAN), and exchange voice and/or data with the RAN. The terminal device 101 may include user equipment (user equipment, UE), a wireless terminal device, a mobile terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal device (user terminal), a user agent (user agent), a user device (user device), or the like. For example, the terminal device may be a device, such as a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). Currently, the terminal devices may be a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in the vehicle to everything, a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. For example, the wireless terminal in the vehicle to everything may be a vehicle-mounted device, an entire vehicle device, a vehicle-mounted module, or a vehicle. The wireless terminal in industrial control may be a camera, a robot, or the like. The wireless terminal in the smart home may be a television, an air conditioner, a sweeper, a speaker, a set-top box, or the like.

In a vehicle to everything scenario, the terminal device 101 may be a vehicle to everything terminal device that is also referred to as a V2X terminal device. Specifically, in a V2V communication process, the terminal device 101 may be a vehicle-mounted terminal. In a V2I communication process, the terminal device 101 may be a vehicle-mounted terminal or an infrastructure having a mobile communication function. In another V2X scenario, the terminal device 101 may alternatively be another V2X device. This is not specifically limited herein. The terminal device 101 may alternatively be a wearable device, such as glasses, gloves, watches, clothing, and shoes, or another portable device that can be directly worn on a body or integrated into clothes or accessories of a user.

In an internet of things scenario, the terminal device 101 may be a limited device, for example, a terminal device with low power, a terminal device with a limited storage capability, or a terminal device with a limited computing capability. This is not specifically limited herein.

It should be understood that the terminal device 101 in this embodiment of this application may be a device in any one of the foregoing scenarios or a chip in the device. This is not specifically limited herein. Either being a device or a chip, the terminal device 101 can be manufactured, sold, or used as an independent product.

In addition, the network device 102 that communicates with the terminal device 101 may be a device in a radio network. For example, the network device is a device that is deployed in a radio access network and that provides a wireless communication function for the terminal device. For example, the network device may be a radio access network (radio access network, RAN) node that connects the terminal device to the radio network, and may also be referred to as an access network device.

The network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, Wi-Fi) system, a radio relay node, a wireless backhaul node, a transmission point (transmission point, TP), a transmission reception point (transmission reception point, TRP), or the like; or may be a network device in a 5G mobile communication system, for example, a next generation NodeB (next generation NodeB, gNB), a transmission reception point (transmission reception point, TRP), or a transmission point (transmission point, TP) in a new radio (new radio, NR) system; or one or a group of (including a plurality of antenna panels) antenna panels of a base station in a 5G mobile communication system. Alternatively, the network device may be a network node that forms a gNB or a transmission point, for example, a baseband unit (baseband unit, BBU) or a distributed unit (distributed unit, DU).

It should be understood that the network device 102 in this embodiment of this application may be any one of the foregoing devices or a chip in the device. This is not specifically limited herein. Either being a device or a chip, the network device 102 can be manufactured, sold, or used as an independent product.

For ease of understanding, the following describes, based on the system architecture shown in FIG. 1, the communication method provided in embodiments of this application.

As shown in FIG. 2, an embodiment of the communication method provided in embodiments of this application includes the following steps.

201: A communication apparatus obtains a demodulation reference signal port number (demodulation reference signal, DMRS), where the demodulation reference signal port number is for determining a resource block offset and a resource element offset.

The communication apparatus in this embodiment of this application may be a network device or a terminal device.

When the communication apparatus is a network device, step 201 may be that the network device selects a demodulation reference signal port number.

When the communication apparatus is a terminal device, step 201 may be that the terminal device receives a port number selected by a network device.

It should be noted that a demodulation reference signal port number in uplink transmission is different from that in downlink transmission. In downlink transmission, the DMRS port number may start from 1000, for example, 1000, 1001, ..., and the like. In uplink transmission, the DMRS port number may start from 0, for example, 0, 1, ..., and the like.

In this embodiment of this application, the resource block offset indicates positions of resource blocks occupied by PTRSs corresponding to DMRS ports with different port numbers in scheduled bandwidth.

In this embodiment of this application, the resource element offset indicates a position of a resource element occupied by a PTRS in a resource block occupied by the PTRS, and the resource element offset is usually represented by 12 integers: 0, 1, 2, ..., and 11.

202: The communication apparatus determines a resource element of a phase tracking reference signal based on the resource block offset and the resource element offset.

203: The communication apparatus sends or receives the phase tracking reference signal based on the resource element of the phase tracking reference signal.

In step 203, if uplink transmission is performed, the terminal device sends the phase tracking reference signal on the resource element of the phase tracking reference signal, and the network device receives the phase tracking reference signal from the resource element of the phase tracking reference signal.

If downlink transmission is performed, the network device sends the phase tracking reference signal on the resource element of the phase tracking reference signal, and the terminal device receives the phase tracking reference signal from the resource element of the phase tracking reference signal.

In this embodiment of this application, the communication apparatus may determine the resource block offset and the resource element offset based on the DMRS port number, and further determine the resource element to which the PTRS is mapped. In this way, PTRSs corresponding to different DMRS port numbers may be mapped to different resource blocks. This improves a degree of PTRS interference randomization.

In this embodiment of this application, before the resource element of the phase tracking reference signal is determined, the resource element offset and the resource block offset may be determined. The following separately describes determining of the resource element offset and the resource block offset.

1. Determine the resource element offset.

Optionally, in the communication method in this embodiment of this application, the communication apparatus further obtains resource element offset indication information, and may determine the resource element offset based on the demodulation reference signal port number and the resource element offset indication information.

The resource element offset indication information may be represented by Offset 00, Offset 01, Offset 10, and Offset 11, and resource element offsets of different resource element offset indication information corresponding to a same port number are different.

Optionally, in the communication method in this embodiment of this application, the communication apparatus further obtains a demodulation reference signal configuration type, and may determine the resource element offset based on the demodulation reference signal port number and the demodulation reference signal configuration type.

There are usually two demodulation reference signal configuration types: a DMRS configuration type (DMRS configuration type) 1 and a DMRS configuration type 2. Resource element offsets corresponding to same DMRS port numbers of different configuration types are different.

For ease of understanding, the following describes the demodulation reference signal port number, the demodulation reference signal configuration type, the resource element offset indication information, and the resource element offset with reference to tables.

Because a demodulation reference signal port number in downlink transmission is different from that in uplink transmission, the following first describes a relationship between the demodulation reference signal port number in downlink transmission, the demodulation reference signal configuration type, the resource element offset indication information, and the resource element offset.

The following Table 1 shows information related to port numbers 1001 to 1003 in downlink transmission when the configuration type is a first type.

Table 1:

| Demodulation reference signal port number | Resource element offset indication information | | | |
|---|---|---|---|---|
| | Offset 00 | Offset 01 | Offset 10 | Offset 11 |
| 1000 | 0 | 2 | 6 | 8 |
| 1001 | 2 | 4 | 8 | 10 |
| 1002 | 1 | 3 | 7 | 9 |
| 1003 | 3 | 5 | 9 | 11 |

In Table 1, Offset 00, Offset 01, Offset 10, and Offset 11 are all resource element offset indication information. 1000, 1001, 1002, and 1003 are four first-type demodulation reference signal port numbers in downlink transmission. A value of an intersection position of the resource element offset indication information and the demodulation reference signal port number is a resource element offset corresponding to the port number. For example, a resource element offset corresponding to the port number 1000 in Offset 00 is 0, and a resource element offset corresponding to the port number 1001 in Offset 01 is 4.

The following Table 2 shows information related to port numbers 1001 to 1005 in downlink transmission when the configuration type is a second type.

Table 2:

| Demodulation reference signal port number | Resource element offset indication information | | | |
|---|---|---|---|---|
| | Offset 00 | Offset 01 | Offset 10 | Offset 11 |
| 1000 | 0 | 1 | 6 | 7 |
| 1001 | 1 | 6 | 7 | 0 |
| 1002 | 2 | 3 | 8 | 9 |
| 1003 | 3 | 8 | 9 | 2 |
| 1004 | 4 | 5 | 10 | 11 |
| 1005 | 5 | 10 | 11 | 4 |

In Table 2, Offset 00, Offset 01, Offset 10, and Offset 11 are all resource element offset indication information. 1000, 1001, 1002, 1003, 1004, and 1005 are six second-type demodulation reference signal port numbers in downlink transmission. A value of an intersection position of the resource element offset indication information and the demodulation reference signal port number is a resource element offset corresponding to the port number. For example, a resource element offset corresponding to the port number 1000 in Offset 00 is 0, and a resource element offset corresponding to the port number 1001 in Offset 01 is 6.

The following Table 3 shows information related to port numbers 1008 to 1011 in downlink transmission when the configuration type is the first type.

Table 3:

| Demodulation reference signal port number | Resource element offset indication information | | | |
|---|---|---|---|---|
| | Offset 00 | Offset 01 | Offset 10 | Offset 11 |
| 1008 | 4 | 6 | 10 | 0 |

(continued)

| Demodulation reference signal port number | Resource element offset indication information | | | |
|---|---|---|---|---|
| | Offset 00 | Offset 01 | Offset 10 | Offset 11 |
| 1009 | 6 | 8 | 0 | 2 |
| 1010 | 5 | 7 | 11 | 1 |
| 1011 | 7 | 9 | 1 | 3 |

In Table 3, Offset 00, Offset 01, Offset 10, and Offset 11 are all resource element offset indication information. 1008, 1009, 1010, and 1011 are four expanded first-type demodulation reference signal port numbers in downlink transmission. A value of an intersection position of the resource element offset indication information and the demodulation reference signal port number is a resource element offset corresponding to the port number. For example, a resource element offset corresponding to the port number 1008 in Offset 00 is 4, and a resource element offset corresponding to the port number 1009 in Offset 01 is 8.

The following Table 4 shows information related to port numbers 1012 to 1017 in downlink transmission when the configuration type is the second type.

Table 4:

| Demodulation reference signal port number | Resource element offset indication information | | | |
|---|---|---|---|---|
| | Offset 00 | Offset 01 | Offset 10 | Offset 11 |
| 1012 | 6 | 7 | 0 | 1 |
| 1013 | 7 | 0 | 1 | 6 |
| 1014 | 8 | 9 | 2 | 3 |
| 1015 | 9 | 2 | 3 | 8 |
| 1016 | 10 | 11 | 4 | 5 |
| 1017 | 11 | 4 | 5 | 10 |

In Table 4, Offset 00, Offset 01, Offset 10, and Offset 11 are all resource element offset indication information. 1012, 1013, 1014, 1015, 1016, and 1017 are six expanded second-type demodulation reference signal port numbers in downlink transmission. A value of an intersection position of the resource element offset indication information and the demodulation reference signal port number is a resource element offset corresponding to the port number. For example, a resource element offset corresponding to the port number 1012 in Offset 00 is 6, and a resource element offset corresponding to the port number 1013 in Offset 01 is 0.

It should be noted that resource element offsets corresponding to expanded first-type port numbers or expanded second-type port numbers are not limited to values in Table 3 and Table 4, and resource element offsets corresponding to original port numbers may be directly reused for the expanded port numbers, as shown in Table 5 and Table 6.

Table 5:

| Demodulation reference signal port number | Resource element offset indication information | | | |
|---|---|---|---|---|
| | Offset 00 | Offset 01 | Offset 10 | Offset 11 |
| 1008 | 0 | 2 | 6 | 8 |
| 1009 | 2 | 4 | 8 | 10 |
| 1010 | 1 | 3 | 7 | 9 |
| 1011 | 3 | 5 | 9 | 11 |

Table 6:

| Demodulation reference signal port number | Resource element offset indication information | | | |
|---|---|---|---|---|
| | Offset 00 | Offset 01 | Offset 10 | Offset 11 |
| 1012 | 0 | 1 | 6 | 7 |
| 1013 | 1 | 6 | 7 | 0 |
| 1014 | 2 | 3 | 8 | 9 |
| 1015 | 3 | 8 | 9 | 2 |
| 1016 | 4 | 5 | 10 | 11 |
| 1017 | 5 | 10 | 11 | 4 |

It is clear that the resource element offsets of the expanded port numbers in downlink transmission in different resource element offset indication information may alternatively be obtained in another manner. This is not limited in this application.

The foregoing describes the correspondence between the configuration type, the port number, the resource element offset indication information, and the resource element offset in downlink transmission. The following describes a correspondence between the configuration type, the port number, the resource element offset indication information, and the resource element offset in uplink transmission.

The following Table 7 shows information related to port numbers 0 to 3 in uplink transmission when the configuration type is the first type.

Table 7:

| Demodulation reference signal port number | Resource element offset indication information | | | |
|---|---|---|---|---|
| | Offset 00 | Offset 01 | Offset 10 | Offset 11 |
| 0 | 0 | 2 | 6 | 8 |
| 1 | 2 | 4 | 8 | 10 |
| 2 | 1 | 3 | 7 | 9 |
| 3 | 3 | 5 | 9 | 11 |

In Table 7, Offset 00, Offset 01, Offset 10, and Offset 11 are all resource element offset indication information. The port numbers 0, 1, 2, and 3 are four first-type demodulation reference signal port numbers in uplink transmission. A value of an intersection position of the resource element offset indication information and the demodulation reference signal port number is a resource element offset corresponding to the port number. For example, a resource element offset corresponding to the port number 0 in Offset 00 is 0, and a resource element offset corresponding to the port number 1 in Offset 01 is 4.

The following Table 8 shows information related to port numbers 0 to 5 in uplink transmission when the configuration type is the second type.

Table 8:

| Demodulation reference signal port number | Resource element offset indication information | | | |
|---|---|---|---|---|
| | Offset 00 | Offset 01 | Offset 10 | Offset 11 |
| 0 | 0 | 1 | 6 | 7 |
| 1 | 1 | 6 | 7 | 0 |
| 2 | 2 | 3 | 8 | 9 |
| 3 | 3 | 8 | 9 | 2 |
| 4 | 4 | 5 | 10 | 11 |
| 5 | 5 | 10 | 11 | 4 |

In Table 8, Offset 00, Offset 01, Offset 10, and Offset 11 are all resource element offset indication information. The port numbers 0, 1, 2, 3, 4, and 5 are six second-type demodulation reference signal port numbers in uplink transmission. A value of an intersection position of the resource element offset indication information and the demodulation reference signal port number is a resource element offset corresponding to the port number. For example, a resource element offset corresponding to the port number 0 in Offset 00 is 0, and a resource element offset corresponding to the port number 1 in Offset 01 is 6.

The following Table 9 shows information related to port numbers 8 to 11 in uplink transmission when the configuration type is the first type.

Table 9:

| Demodulation reference signal port number | Resource element offset indication information | | | |
|---|---|---|---|---|
| | Offset 00 | Offset 01 | Offset 10 | Offset 11 |
| 8 | 4 | 6 | 10 | 0 |
| 9 | 6 | 8 | 0 | 2 |
| 10 | 5 | 7 | 11 | 1 |
| 11 | 7 | 9 | 1 | 3 |

In Table 9, Offset 00, Offset 01, Offset 10, and Offset 11 are all resource element offset indication information. The port numbers 8, 9, 10, and 11 are four expanded first-type demodulation reference signal port numbers in uplink transmission. A value of an intersection position of the resource element offset indication information and the demodulation reference signal port number is a resource element offset corresponding to the port number. For example, a resource element offset corresponding to the port number 8 in Offset 00 is 4, and a resource element offset corresponding to the port number 9 in Offset 01 is 8.

The following Table 10 shows information related to port numbers 12 to 17 in uplink transmission when the configuration type is the second type.

Table 10:

| Demodulation reference signal port number | Resource element offset indication information | | | |
|---|---|---|---|---|
| | Offset 00 | Offset 01 | Offset 10 | Offset 11 |
| 12 | 6 | 7 | 0 | 1 |
| 13 | 7 | 0 | 1 | 6 |
| 14 | 8 | 9 | 2 | 3 |
| 15 | 9 | 2 | 3 | 8 |
| 16 | 10 | 11 | 4 | 5 |
| 17 | 11 | 4 | 5 | 10 |

In Table 10, Offset 00, Offset 01, Offset 10, and Offset 11 are all resource element offset indication information. The port numbers 12, 13, 14, 15, 16, and 17 are six expanded second-type demodulation reference signal port numbers in uplink transmission. A value of an intersection position of the resource element offset indication information and the demodulation reference signal port number is a resource element offset corresponding to the port number. For example, a resource element offset corresponding to the port number 1012 in Offset 00 is 6, and a resource element offset corresponding to the port number 1013 in Offset 01 is 0.

Resource element offsets corresponding to expanded first-type port numbers or expanded second-type port numbers in the uplink transmission is not limited to values in Table 10 and Table 11, and the resource element offsets corresponding to the original port numbers in Table 8 and Table 9 may be directly reused for the expanded port numbers. A specific form may be understood with reference to Table 6 and Table 7, provided that the port numbers are replaced with the port numbers in uplink transmission, and a corresponding table is not listed herein again.

In the foregoing described solutions, an expanded demodulation reference signal port and an original demodulation reference signal port are involved, and the ports have corresponding phase tracking reference signals. For ease of understanding, in this application, a phase tracking reference signal corresponding to the expanded demodulation reference signal port is referred to as a first phase tracking reference signal, and a phase tracking reference signal corresponding to the original demodulation reference signal port is referred to as a second phase tracking reference signal.

In this way, during downlink transmission, the first phase tracking reference signal is a phase tracking reference signal corresponding to a port whose demodulation reference signal configuration type is the first type and whose demodulation reference signal port number is greater than or equal to 1008, or a corresponding phase tracking reference signal whose demodulation reference signal configuration type is the second type and whose demodulation reference signal port number is greater than or equal to 1012. The second phase tracking reference signal is a phase tracking reference signal corresponding to a port whose demodulation reference signal configuration type is the first type and whose demodulation reference signal port number is smaller than 1008, or a phase tracking reference signal corresponding to a port whose demodulation reference signal configuration type is the second type and whose demodulation reference signal port number is smaller than 1012.

It may be understood that the port number greater than or equal to 1008 may include 1008, 1009, 1010, and 1011. The port number greater than or equal to 1012 may include 1012, 1013, 1014, 1015, 1016, and 1017. The port number smaller than 1008 may include 1000, 1001, 1002, 1003, 1004, 1005, 1006, and 1007. The port number smaller than 1012 may include 1000, 1001, 1002, 1003, 1004, 1005, 1006, 1007, 1008, 1009, 1010, and 1011.

It can be learned from the foregoing descriptions that, during downlink transmission, the first-type port number that is smaller than 1008 may be understood as an original first-type DMRS port number, and a port number that is greater than or equal to 1008 may be understood as a newly expanded first-type DMRS port number. The second-type port number that is smaller than 1012 may be understood as an original second-type DMRS port number. The second-type port number that is greater than or equal to 1012 may be understood as a newly expanded second-type DMRS port number.

During uplink transmission, the first phase tracking reference signal is a phase tracking reference signal corresponding to a port whose demodulation reference signal configuration type is the first type and whose demodulation reference signal port number is greater than or equal to 8, or a phase tracking reference signal corresponding to a port whose demodulation reference signal configuration type is the second type and whose demodulation reference signal port number is greater than or equal to 12. The second phase tracking reference signal is a phase tracking reference signal corresponding to a port whose demodulation reference signal configuration type is the first type and whose demodulation reference signal port number is smaller than 8, or a phase tracking reference signal corresponding to a port whose demodulation reference signal configuration type is the second type and whose demodulation reference signal port number is smaller than 12.

It may be understood that the port number greater than or equal to 8 may include 8, 9, 10, and 11. The port number greater than or equal to 12 may include 12, 13, 14, 15, 16, and 17. The port number smaller than 8 may include 0, 1, 2, 3, 4, 5, 6, and 7. The port number smaller than 12 may include 0, 1, 2, 3, 4, 5, 6, 7, 8, 9, 10, and 11.

It can be learned from the foregoing descriptions that, during uplink transmission, the first-type port number that is smaller than 8 may be understood as an original first-type DMRS port number, and the port number that is greater than or equal to 8 may be understood as a newly expanded first-type DMRS port number. The second-type port number that is smaller than 12 may be understood as an original second-type DMRS port number. The second-type port number that is greater than or equal to 12 may be understood as a newly expanded second-type DMRS port number.

The foregoing describes solutions for obtaining the resource element offset, and the following describes solutions for obtaining the resource block offset.

2. Determine the resource block offset.

Optionally, the communication apparatus obtains a radio network temporary identifier of a terminal device, where the demodulation reference signal port number and the radio network temporary identifier (radio network temporary identity, RNTI) are for determining the resource block offset.

Optionally, the radio network temporary identifier of the terminal device may include, for example, at least one of the following identifiers: a cell radio network temporary identifier (cell radio network temporary identifier, C-RNTI), a random access response temporary identifier (random access response temporary identifier, RA-RNTI), a temporary C-RNTI, and a transmit power control temporary identifier (transmit power control temporary identifier, TPC-RNTI). This is not limited in embodiments of this application.

Optionally, the communication apparatus obtains $N_{RB}$ resource blocks used for data transmission and resource block density indication information of the phase tracking reference signal, where $N_{RB}$ is an integer greater than 1, indexes of the $N_{RB}$ resource blocks are 0, 1, ..., and ($N_{RB}$-1), the resource block density indication information indicates resource block density of the phase tracking reference signal, and $N_{RB}$ and the resource block density are for determining the resource block offset.

In this possible implementation, the resource block density indication information may indicate the resource block density, the resource block density may also be referred to as frequency domain density, and a value of the resource block density may be 2 or 4, in other words, a PTRS appears once on every two or four resource blocks. It should be noted that the resource block density indication information may indicate the resource block density in an indirect manner. For example, downlink transmission may notify two bandwidth thresholds of uplink transmission. The two thresholds are respectively represented by $N_{RB0}$ and $N_{RB1}$, and $N_{RB0} < N_{RB1}$. If $N_{RB0} \leq N_{RB} < N_{RB1}$, a value of the resource block density is 2. If $N_{RB1} \leq N_{RB1}$ a value of the resource block density is 4. It is clear that the value of the resource block density is not limited in this application. The value of the resource block density may be 2 or 4 described above, or may be another value. It should be noted that a manner of indicating the resource block density is not limited in this application, and the resource block density may be indicated in the indirect manner described above, or may be indicated in another indirect manner, or may be indicated in a direct manner.

If $N_{RB}=1$, it indicates that there is only one resource block, and the resource block offset is 0.

When there are a plurality of resource blocks, a value of the resource block offset is related to a relational expression for determining the resource element of the phase tracking reference signal.

When a first relational expression is used, the resource block offset includes a first offset parameter and a second offset parameter, where the first offset parameter and the second offset parameter are for determining a resource element of the first phase tracking reference signal and a resource element of the second phase tracking reference signal.

The foregoing step 202 includes: determining the resource element of the first phase tracking reference signal and/or the resource element of the second phase tracking reference signal by using the first relational expression, where the first relational expression is:

$$k = k_{ref}^{RE} + (iK_{PT-RS} + k_{ref}^{RB} + k_{offset}^{RB})N_{RB}^{SC}.$$

$k$ is an index of the resource element of the first phase tracking reference signal and/or an index of the resource element of the second phase tracking reference signal, $i$ is a natural number, $N_{RB}^{SC}$ is a quantity of subcarriers in one resource block, $K_{PT-RS}$ is the resource block density, $k_{ref}^{RB}$ is the first offset parameter, $k_{offset}^{RB}$ is the second offset parameter, and $k_{ref}^{RE}$ is the resource element offset, where

$$k_{ref}^{RB} = \begin{cases} n_{RNTI} \bmod K_{PT-RS}, & \text{if } N_{RB} \bmod K_{PT-RS} = 0 \\ n_{RNTI} \bmod (N_{RB} \bmod K_{PT-RS}), & \text{otherwise} \end{cases}.$$

$n_{RNTI}$ is the radio network temporary identifier, $mod$ represents a modulo operation, and $N_{RB}$ is the quantity of the resource blocks.

If $N_{RB} \bmod K_{PT-RS} = 0$, $k_{ref}^{RB} = n_{RNTI} \bmod K_{PT-RS}$; or if $N_{RB} \bmod K_{PT-RS} \neq 0$, $k_{ref}^{RB} = n_{RNTI} \bmod (N_{RB} \bmod K_{PT-RS})$.

It can be learned from the foregoing relational expression that the first offset parameter $k_{ref}^{RB}$ may be obtained based on the quantity $N_{RB}$ of resource blocks, the resource block density $K_{PT-RS}$, and the radio network temporary identifier $n_{RNTI}$.

The second offset parameter $k_{offset}^{RB}$ may be obtained based on $K_{PT-RS}$ and $k_{ref}^{RB}$.

If $K_{PT-RS} = 2$, $k_{offset}^{RB} = \begin{cases} 1, & \text{if } k_{ref}^{RB} = 0 \\ -1, & \text{if } k_{ref}^{RB} = 1 \end{cases}$.

In other words, when $K_{PT-RS} = 2$, if $k_{ref}^{RB} = 0$, $k_{offset}^{RB} = 1$; or if $k_{ref}^{RB} = 1$, $k_{offset}^{RB} = -1$.

If $K_{PT-RS} = 4$, $k_{offset}^{RB} = \begin{cases} 2, & \text{if } k_{ref}^{RB} = 0,1 \\ -2, & \text{if } k_{ref}^{RB} = 2,3 \end{cases}$.

In other words, when $K_{PT-RS} = 4$, if $k_{ref}^{RB} = 0$ or 1, $k_{offset}^{RB} = 2$; or if 2 or 3, $k_{offset}^{RB} = -2$.

In the foregoing descriptions, when $k_{offset}^{RB} = 1$, -1, 2 or - 2, obtained *k* is the index of the resource element of the first phase tracking reference signal, namely, an index of a resource element of the phase tracking reference signal corresponding to the expanded port number.

If $k_{offset}^{RB} = 0$, obtained *k* is the index of the resource element of the second phase tracking reference signal, namely, an index of a resource element of the phase tracking reference signal corresponding to the original port number.

For ease of understanding, the following describes occupation of resource blocks by the first phase tracking reference signal and the second phase tracking reference signal when the foregoing parameters are set to different values.

(1) When the resource block density is equal to 2, and $N_{RB}$ is an odd number, the second offset parameter is 1. That the second offset parameter is 1 indicates that an index of a resource block to which the resource element of the first phase tracking reference signal belongs is 2M+1, and indicates that an index of a resource block to which the resource element of the second phase tracking reference signal belongs is 2M, where M≥0, and M is an integer.

In other words, when $K_{PT-RS}$ = 2, $N_{RB}$ is an odd number, and $k_{offset}^{RB} = 1$, the index of the resource block to which the resource element of the first phase tracking reference signal belongs is 2M+1. This indicates that the index of the resource block to which the resource element of the second phase tracking reference signal belongs is 2M, where M≥0, and M is an integer. In this case, the first phase tracking reference signal may occupy resource blocks whose indexes are 1, 3, 5, 7, 9, ..., and ($N_{RB}$ - 2), and the second phase tracking reference signal may occupy resource blocks whose indexes are 0, 2, 4, 6, 8, ..., and ($N_{RB}$ - 1).

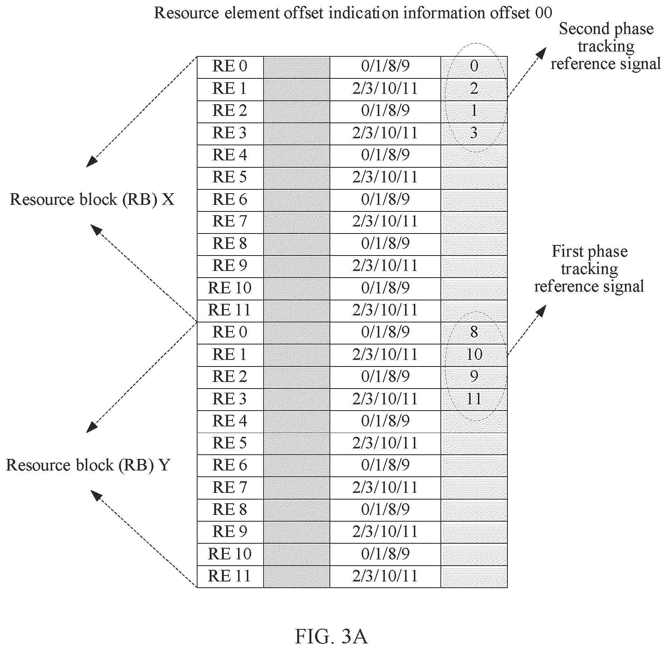

Refer to FIG. 3A. First-type port numbers in uplink transmission are used as an example. When $k_{offset}^{RB} = 1$, and resource element offset indication information is offset 00, a second phase tracking reference signal corresponding to original port numbers that are 0, 1, 2, and 3 is mapped to a resource block RB X, and a first phase tracking reference signal corresponding to expanded port numbers that are 8, 9, 10, and 11 is mapped to a resource block RB Y. In FIG. 3A, Y=X+1. If an index of the RB X is 0, an index of the RB Y is 1. FIG. 3A only shows two resource blocks. If there are a plurality of resource blocks, RB X and RB Y patterns may be repeated, but values of X and Y are increased accordingly.

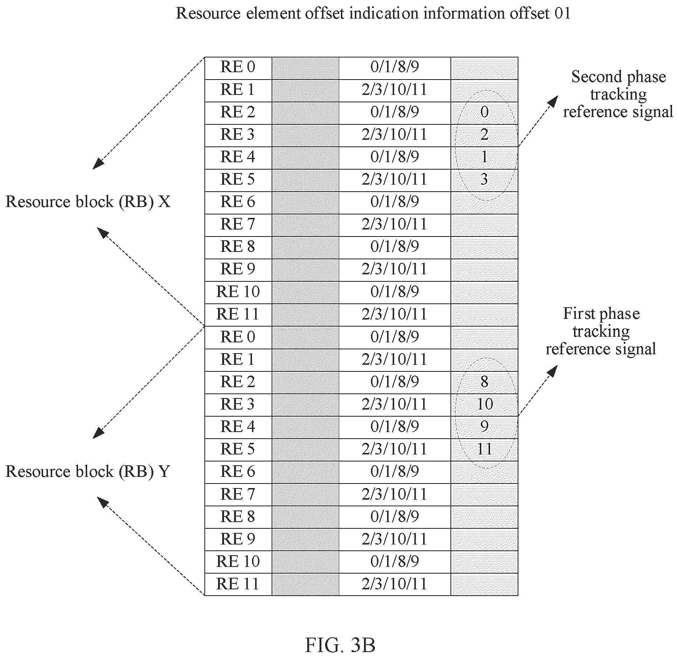

FIG. 3B is a diagram in which the resource element offset indication information is offset 01. It can be learned from FIG. 3B that, in comparison with FIG. 3A, only a position of a start RE of the first phase tracking reference signal in the RB Y is moved downward by two resource elements, and is changed from RE 0 to RE 2; and a position of a start RE of the second phase tracking reference signal in the RB X is moved downward by two resource elements, and is changed from RE 0 to RE 2. Other details may be understood with reference to the descriptions in FIG. 3A.

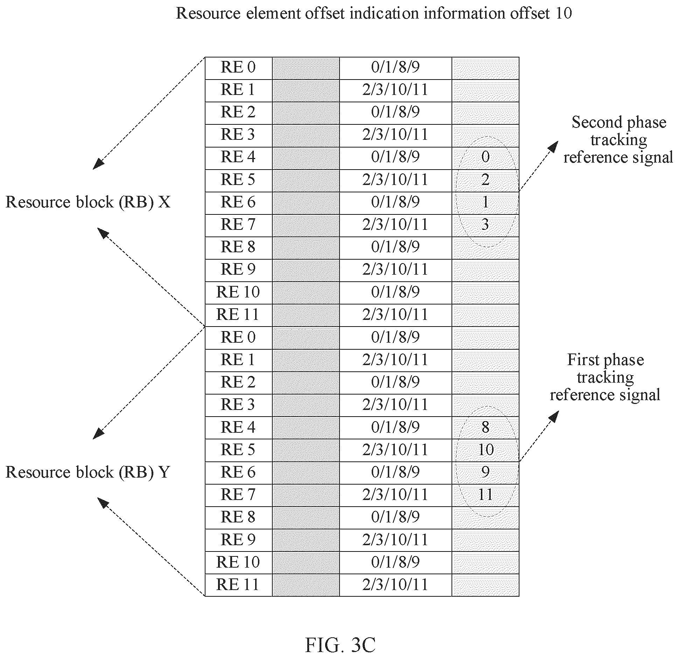

Similarly, when the resource element offset indication information shown in FIG. 3C is offset 10, in comparison with FIG. 3B, in FIG. 3C, a position of a start RE of the first phase tracking reference signal in the RB Y is moved downward by two resource elements, and is changed from RE 2 to RE 4, and a position of a start RE of the second phase tracking reference signal in the RB X is moved downward by two resource elements, and is changed from RE 2 to RE 4. Other details may be understood with reference to the descriptions in FIG. 3A.

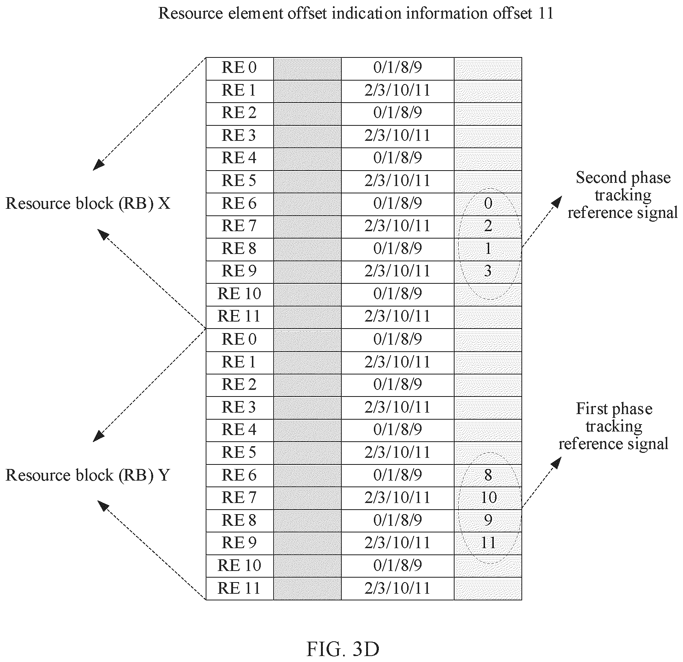

Similarly, when the resource element offset indication information shown in FIG. 3D is offset 11, in comparison with FIG. 3C, in FIG. 3D, a position of a start RE of the first phase tracking reference signal in the RB Y is moved downward by two resource elements, and is changed from RE 4 to RE 6, and a position of a start RE of the second phase tracking reference signal in the RB X is moved downward by two resource elements, and is changed from RE 4 to RE 6. Other details may be understood with reference to the descriptions in FIG. 3A.

(2) When the resource block density is equal to 2, $N_{RB}$ is an even number, and the radio network temporary identifier is an odd number, the second offset parameter is -1. That the second offset parameter is -1 indicates that an index of a resource block to which the resource element of the first phase tracking reference signal belongs is 2M, and indicates that an index of a resource block to which the resource element of the second phase tracking reference signal belongs is 2M+1, where M≥0, and M is an integer.

In other words, when $K_{PT-RS}$ = 2, $N_{RB}$ is an even number, and $n_{RNTI}$ is an odd number, $k_{offset}^{RB} = -1$. This indicates that the index of the resource block to which the resource element of the first phase tracking reference signal belongs is 2M, and indicates that the index of the resource block to which the resource element of the second phase tracking reference signal belongs is 2M+1, where M≥0, and M is an integer. In this case, the first phase tracking reference signal may occupy resource blocks whose indexes are 0, 2, 4, 6, 8, ..., and ($N_{RB}$ - 2), and the second phase tracking reference signal may occupy resource blocks whose indexes are 1, 3, 5, 7, 9, ..., and ($N_{RB}$ - 1).

With reference to FIG. 3A to FIG. 3D, a difference from FIG. 3A to FIG. 3D is that the first phase tracking reference signal occupies the RB X, the second phase tracking reference signal occupies the RB Y. Other details may be understood with reference to the foregoing descriptions.

(3) When the resource block density is equal to 2, $N_{RB}$ is an even number, and the radio network temporary identifier is an even number, the second offset parameter is 1. That the second offset parameter is 1 indicates that an index of a resource block to which the resource element of the first phase tracking reference signal belongs is 2M+1, indicates that an index of a resource block to which the resource element of the second phase tracking reference signal belongs is 2M, where M≥0, and M is an integer.

In other words, when $K_{PT-RS}$ = 2, $N_{RB}$ is an even number, and $n_{RNTI}$ is an even number, $k_{offset}^{RB} = 1$. This indicates that the index of the resource block to which the resource element of the first phase tracking reference signal belongs is 2M+1, and indicates that the index of the resource block to which the resource element of the second phase tracking reference signal belongs is 2M, where M≥0, and M is an integer. In this case, the first phase tracking reference signal may occupy resource blocks whose indexes are 1, 3, 5, 7, 9, ..., and ($N_{RB}$ - 1), and the second phase tracking reference signal may occupy resource blocks whose indexes are 0, 2, 4, 6, 8, ..., and ($N_{RB}$ - 2).

This case may be understood with reference to FIG. 3A to FIG. 3D.

(4) When the resource block density is equal to 4, $N_{RB}$ is an integer multiple of 4, and the radio network temporary identifier is a multiple of 4, the second offset parameter is 2. That the second offset parameter is 2 indicates that an index of a resource block to which the resource element of the first phase tracking reference signal belongs is 4M+2, and indicates that an index of a resource block to which the resource element of the second phase tracking reference signal belongs is 4M, where M≥0, and M is an integer.

In other words, when $K_{PT-RS}$ = 4, $N_{RB}$ is an integer multiple of 4, and $n_{RNTI}$ is a multiple of 4, $k_{offset}^{RB} = 2$. This indicates that the index of the resource block to which the resource element of the first phase tracking reference signal belongs is 4M+2, and indicates that the index of the resource block to which the resource element of the second phase tracking reference signal belongs is 4M, where M≥0, and M is an integer. In this case, the first phase tracking reference signal may occupy resource blocks whose indexes are 2, 6, 10, ..., and ($N_{RB}$ - 2), and the second phase tracking reference signal may occupy resource blocks whose indexes are 0, 4, 8, ..., and ($N_{RB}$ - 4).

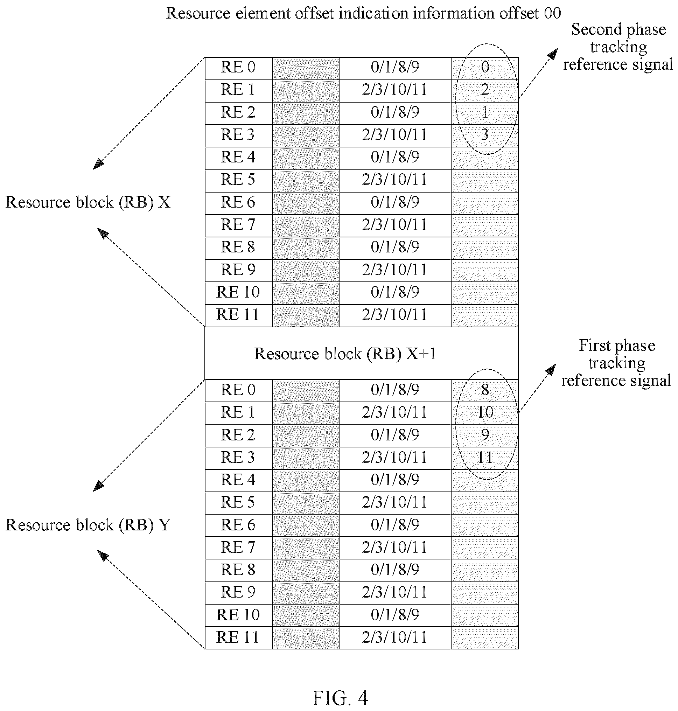

Refer to FIG. 4. First-type port numbers in uplink transmission are used as an example. When $k_{offset}^{RB} = 2$, and resource element offset indication information is offset 00, a second phase tracking reference signal corresponding to original port numbers that are 0, 1, 2, and 3 is mapped to a resource block RB X, and a first phase tracking reference signal corresponding to expanded port numbers that are 8, 9, 10, and 11 is mapped to a resource block RB Y. In FIG. 4, Y=X+2. If an index of the RB X is 0, an index of the RB Y is 2. FIG. 4 only shows two resource blocks. If there are a plurality of resource blocks, RB X and RB Y patterns may be repeated, but values of X and Y are increased accordingly.

Other cases in which the resource element offset indication information is offset 01, offset 10, or offset 11 may be understood with reference to FIG. 4 and FIG. 3B, FIG. 3C, and FIG. 3D. Details are not shown herein one by one.

(5) When the resource block density is equal to 4, $N_{RB}$ is an integer multiple of 4, and a modulus of the radio network temporary identifier that is set to 4 is 1, the second offset parameter is 2. That the second offset parameter is 2 indicates that an index of a resource block to which the resource element of the first phase tracking reference signal belongs is 4M+3, and indicates that an index of a resource block to which the resource element of the second phase tracking reference signal belongs is 4M+1, where M≥0, and M is an integer.

In other words, when $K_{PT-RS}$ = 4, $N_{RB}$ is an integer multiple of 4, and the modulus of $n_{RNTI}$ that is set to 4 is 1, $k_{offset}^{RB} = 2$. This indicates that the index of the resource block to which the resource element of the first phase tracking reference signal belongs is 4M+3, and indicates that the index of the resource block to which the resource element of the second phase tracking reference signal belongs is 4M+1, where M≥0, and M is an integer. In this case, the first phase tracking reference signal may occupy resource blocks whose indexes are 3, 7, 11, ..., and ($N_{RB}$ - 1), and the second phase tracking reference signal may occupy resource blocks whose indexes are 1, 5, 9, ..., and ($N_{RB}$ - 3).

(6) When the resource block density is equal to 4, $N_{RB}$ is an integer multiple of 4, and a modulus of the radio network temporary identifier that is set to 4 is 2, the second offset parameter is -2. That the second offset parameter is -2 indicates that an index of a resource block to which the resource element of the first phase tracking reference signal belongs is 4M, and indicates that an index of a resource block to which the resource element of the second phase tracking reference signal belongs is 4M+2, where M≥0, and M is an integer.

In other words, when $K_{PT-RS}$ = 4, $N_{RB}$ is an integer multiple of 4, and the modulus of $n_{RNTI}$ that is set to 4 is 2, $k_{offset}^{RB} = -2$. This indicates that the index of the resource block to which the resource element of the first phase tracking reference signal belongs is 4M, and indicates that the index of the resource block to which the resource element of the second phase tracking reference signal belongs is 4M+2, where M≥0, and M is an integer. In this case, the first phase tracking reference signal may occupy resource blocks whose indexes are 0, 4, 8, ..., and ($N_{RB}$ - 4), and the second phase tracking reference signal may occupy resource blocks whose indexes are 2, 6, 10, ..., and ($N_{RB}$ - 2).

In this case, refer to FIG. 4. The first phase tracking reference signal occupies the RB X, and the second phase tracking reference signal occupies the RB Y

(7) When the resource block density is equal to 4, $N_{RB}$ is an integer multiple of 4, and a modulus of the radio network temporary identifier that is set to 4 is 3, the second offset parameter is -2. That the second offset parameter is -2 indicates that an index of a resource block to which the resource element of the first phase tracking reference signal belongs is 4M+1, and indicates that an index of a resource block to which the resource element of the second phase tracking reference signal belongs is 4M+3, where M≥0, and M is an integer.

In other words, when $K_{PT\text{-}RS}$ = 4, $N_{RB}$ is an integer multiple of 4, and the modulus of $n_{RNTI}$ that is set to 4 is 3,

$$k_{offset}^{RB} = -2$$. This indicates that the index of the resource block to which the resource element of the first phase tracking reference signal belongs is 4M+1, and indicates that the index of the resource block to which the resource element of the second phase tracking reference signal belongs is 4M+3, where M≥0, and M is an integer. In this case, the first phase tracking reference signal may occupy resource blocks whose indexes are 1, 5, 9, ..., and ($N_{RB}$ - 3), and the second phase tracking reference signal may occupy resource blocks whose indexes are 3, 7, 11, ..., and ($N_{RB}$ - 1).

In this case, refer to FIG. 4. The first phase tracking reference signal occupies the RB X, and the second phase tracking reference signal occupies the RB Y

(8) When the resource block density is equal to 4, and a modulus of $N_{RB}$ that is set to 4 is 1, the second offset parameter is 2. That the second offset parameter is 2 indicates that an index of a resource block to which the resource element of the first phase tracking reference signal belongs is 4M+2, and indicates that an index of a resource block to which the resource element of the second phase tracking reference signal belongs is 4M, where M≥0, and M is an integer.

In other words, when $K_{PT\text{-}RS}$ = 4, and the modulus of $N_{RB}$ that is set to 4 is 1, $k_{offset}^{RB} = 2$. This indicates that the index of the resource block to which the resource element of the first phase tracking reference signal belongs is 4M+2, and indicates that the index of the resource block to which the resource element of the second phase tracking reference signal belongs is 4M, where M≥0, and M is an integer. In this case, the first phase tracking reference signal may occupy resource blocks whose indexes are 2, 6, 10, ..., and ($N_{RB}$ - 3), and the second phase tracking reference signal may occupy resource blocks whose indexes are 0, 4, 8, ..., and ($N_{RB}$ - 1).

(9) When the resource block density is equal to 4, a modulus of $N_{RB}$ that is set to 4 is 2, and the radio network temporary identifier is an even number, the second offset parameter is 2. That the second offset parameter is 2 indicates that an index of a resource block to which the resource element of the first phase tracking reference signal belongs is 4M+2, and indicates that an index of a resource block to which the resource element of the second phase tracking reference signal belongs is 4M, where M≥0, and M is an integer.

In other words, when $K_{PT\text{-}RS}$ = 4, the modulus of $N_{RB}$ that is set to 4 is 2, and $n_{RNTI}$ is an even number,

$$k_{offset}^{RB} = 2$$. This indicates that the index of the resource block to which the resource element of the first phase tracking reference signal belongs is 4M+2, and indicates that the index of the resource block to which the resource element of the second phase tracking reference signal belongs is 4M, where M≥0, and M is an integer. In this case, the first phase tracking reference signal may occupy resource blocks whose indexes are 2, 6, 10, ..., and ($N_{RB}$ - 4), and the second phase tracking reference signal may occupy resource blocks whose indexes are 0, 4, 8, ..., and ($N_{RB}$ - 2).

(10) When the resource block density is equal to 4, a modulus of $N_{RB}$ that is set to 4 is 2, and the radio network temporary identifier is an odd number, the second offset parameter is 2. That the second offset parameter is 2 indicates that an index of a resource block to which the resource element of the first phase tracking reference signal belongs is 4M+3, and indicates that an index of a resource block to which the resource element of the second phase tracking reference signal belongs is 4M+1, where M≥0, and M is an integer.

In other words, when $K_{PT\text{-}RS}$ = 4, the modulus of $N_{RB}$ that is set to 4 is 2, and $n_{RNTI}$ is an odd number,

$$k_{offset}^{RB} = 2$$. This indicates that the index of the resource block to which the resource element of the first phase tracking reference signal belongs is 4M+3, and indicates that the index of the resource block to which the resource element of the second phase tracking reference signal belongs is 4M+1, where M≥0, and M is an integer. In this case, the first phase tracking reference signal may occupy resource blocks whose indexes are 3, 7, 11, ..., and ($N_{RB}$ - 3), and the second phase tracking reference signal may occupy resource blocks whose indexes are 1, 5, 9, ..., and ($N_{RB}$ - 1).

(11) When the resource block density is equal to 4, a modulus of $N_{RB}$ that is set to 4 is 3, and a modulus of the radio network temporary identifier that is set to 3 is 0, the second offset parameter is 2. That the second offset parameter is 2 indicates that an index of a resource block to which the resource element of the first phase tracking reference signal belongs is 4M+2, and indicates that an index of a resource block to which the resource element of the second phase tracking reference signal belongs is 4M, where M≥0, and M is an integer.

In other words, when $K_{PT\text{-}RS}$ = 4, the modulus of $N_{RB}$ that is set to 4 is 3, and the modulus of $n_{RNTI}$ that is set to 3 is 0, $k_{offset}^{RB} = 2$. This indicates that the index of the resource block to which the resource element of the first phase tracking reference signal belongs is 4M+2, and indicates that the index of the resource block to which the resource element of the second phase tracking reference signal belongs is 4M, where M≥0, and M is an integer. In this case, the first phase tracking reference signal may occupy resource blocks whose indexes are 2, 6, 10, ..., and ($N_{RB}$ - 1), and the second phase tracking reference signal may occupy resource blocks whose indexes are 0, 4, 8, ..., and ($N_{RB}$ - 3).

(12) When the resource block density is equal to 4, a modulus of $N_{RB}$ that is set to 4 is 3, and a modulus of the radio network temporary identifier that is set to 3 is 1, the second offset parameter is 2. That the second offset parameter is 2 indicates that an index of a resource block to which the resource element of the first phase tracking reference signal belongs is 4M+3, and indicates that an index of a resource block to which the resource element of the second phase tracking reference signal belongs is 4M+1, where M≥0, and M is an integer.

In other words, when $K_{PT\text{-}RS}$ = 4, the modulus of $N_{RB}$ that is set to 4 is 3, and the modulus of $n_{RNTI}$ that is set to 3 is 1, $k_{offset}^{RB} = 2$. This indicates that the index of the resource block to which the resource element of the first phase tracking reference signal belongs is 4M+3, and indicates that the index of the resource block to which the resource element of the second phase tracking reference signal belongs is 4M+1, where M≥0, and M is an integer. In this case, the first phase tracking reference signal may occupy resource blocks whose indexes are 3, 7, 11, ..., and ($N_{RB}$ - 4), and the second phase tracking reference signal may occupy resource blocks whose indexes are 1, 5, 9, ..., and ($N_{RB}$ - 2).

(13) When the resource block density is equal to 4, a modulus of $N_{RB}$ that is set to 4 is 3, and a modulus of the radio network temporary identifier that is set to 3 is 2, the second offset parameter is -2. That the second offset parameter is -2 indicates that an index of a resource block to which the resource element of the first phase tracking reference signal belongs is 4M, and indicates that an index of a resource block to which the resource element of the second phase tracking reference signal belongs is 4M+2, where M≥0, and M is an integer.

In other words, when $K_{PT\text{-}RS}$ = 4, the modulus of $N_{RB}$ that is set to 4 is 3, and the modulus of $n_{RNTI}$ that is set to 3 is 2, $k_{offset}^{RB} = -2$. This indicates that the index of the resource block to which the resource element of the first phase tracking reference signal belongs is 4M, and indicates that the index of the resource block to which the resource element of the second phase tracking reference signal belongs is 4M+2, where M≥0, and M is an integer. In this case, the first phase tracking reference signal may occupy resource blocks whose indexes are 0, 4, 8, ..., and ($N_{RB}$ - 3), and the second phase tracking reference signal may occupy resource blocks whose indexes are 2, 6, 10, ..., and ($N_{RB}$ - 1).

It should be noted that the value of $K_{PT\text{-}RS}$ is not limited to 2 and 4 listed above, and may alternatively be another value. This is not limited in this embodiment.

In the solutions described above, for both the original DMRS port number and the newly expanded DMRS port number, k may be determined by using the first relational expression, and then the first phase tracking reference signal and/or the second phase tracking reference signal are/is correctly received.

The foregoing describes the solutions for determining the index $k$ of the resource element of the first phase tracking reference signal and the index $k$ of the resource element of the second phase tracking reference signal by using the first relational expression. Actually, an index $k$ of the resource element of the first phase tracking reference signal may alternatively be determined by using a second relational expression. In this case, step 202 includes: determining the resource element of the first phase tracking reference signal by using the second relational expression, where the second relational expression is:

$$k = k_{ref}^{RE} + (iK_{PT-RS} + k_{ref}^{RB})N_{RB}^{SC}.$$

$k$ is an index of the resource element of the first phase tracking reference signal, i is a natural number, $N_{RB}^{SC}$ is a quantity of subcarriers in one resource block, $K_{PT\text{-}RS}$ is the resource block density, $k_{ref}^{RB}$ is the resource block offset, and $k_{ref}^{RE}$ is the resource element offset.

If $K_{PT\text{-}RS}$ = 2,

$$k_{ref}^{RB} = \begin{cases} 0, if\, N_{RB}\ mod\ 2 = 0\ and\ n_{RNTI}\ mod\ 2 = 1 \\ 1, otherwise \end{cases}.$$

If $K_{PT\text{-}RS}$ = 4 and $N_{RB}$ mod 4 = 0,

$$k_{ref}^{RB} = \begin{cases} 2, if\, n_{RNTI}\ mod\ 4=0 \\ 3, if\, n_{RNTI}\ mod\ 4=1 \\ 0, if\, n_{RNTI}\ mod\ 4=2 \\ 1, if\, n_{RNTI}\ mod\ 4=3 \end{cases}.$$

If $K_{PT\text{-}RS}$ = 4 and $N_{RB}$ mod 4 = 1,

$$k_{ref}^{RB} = 2.$$

If $K_{PT\text{-}RS}$ = 4 and $N_{RB}$ mod 4 = 2,

$$k_{ref}^{RB} = \begin{cases} 2, if\, n_{RNTI}\ mod\ 2=0 \\ 3, if\, n_{RNTI}\ mod\ 2=1 \end{cases}.$$

If $K_{PT\text{-}RS}$ = 4 and $N_{RB}$ mod 4 = 3,

$$k_{ref}^{RB} = \begin{cases} 2, if\, n_{RNTI}\ mod\ 3 = 0 \\ 3, if\, n_{RNTI}\ mod\ 3 = 1 \\ 0, if\, n_{RNTI}\ mod\ 3 = 2 \end{cases}.$$

$n_{RNTI}$ is the radio network temporary identifier, *mod* represents a modulo operation, and $N_{RB}$ is the quantity of the resource blocks.

Solutions for determining performed by using the second relational expression may include the following plurality of solutions:

(1) When the resource block density is equal to 2, and $N_{RB}$ is an odd number, the resource block offset is 1. That the resource block offset is 1 indicates that an index of a resource block to which the resource element of the first phase tracking reference signal belongs is 2M+1, where M≥0, and M is an integer.

In other words, when $K_{PT\text{-}RS}$ = 2, and $N_{RB}$ is an odd number, $k_{ref}^{RB}=1$. This indicates that the index of the resource block to which the resource element of the first phase tracking reference signal belongs is 2M+1, where M≥0, and M is an integer. In this case, the first phase tracking reference signal may occupy resource blocks whose indexes are 1, 3, 5, 7, 9, ..., and ($N_{RB}$ - 2).

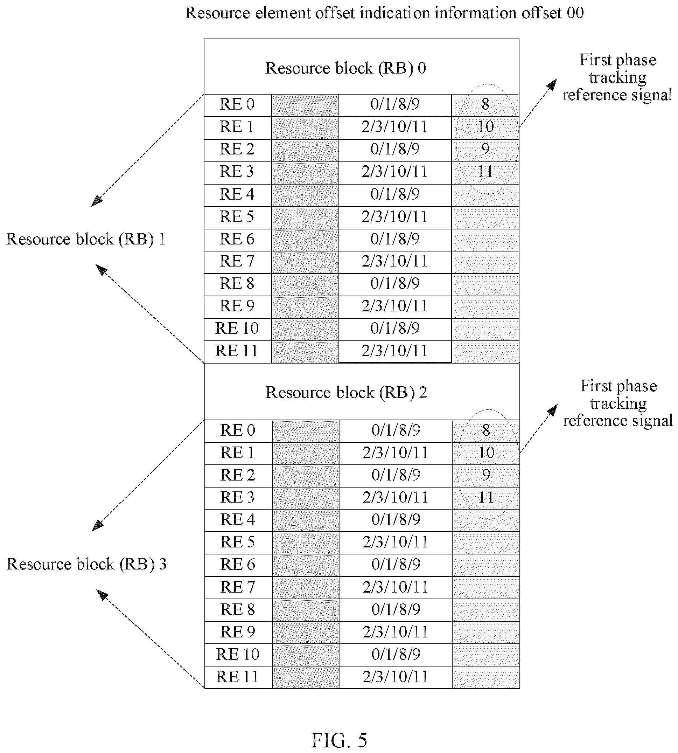

Refer to FIG. 5. First-type port numbers in uplink transmission are used as an example. When $k_{offset}^{RB} = 1$, and resource element offset indication information is offset 00, a first phase tracking reference signal corresponding to expanded port numbers that are 8, 9, 10, and 11 is mapped to resource blocks whose indexes are odd numbers. In FIG. 5, four resource blocks are shown as an example. The first phase tracking reference signal is mapped to an RB 1 and an RB 3.

The resource element offset indication information being offset 00 is merely an example for description. Other cases in which the resource element offset indication information is offset 01, offset 10, and offset 11 are merely different in a position of a start RE to which the first phase tracking reference signal is mapped in an RB. This may be understood with reference to FIG. 3B to FIG. 3D, and details are not shown one by one in this application.

(2) When the resource block density is equal to 2, $N_{RB}$ is an even number, and the radio network temporary identifier is an even number, the resource block offset is 1. That the resource block offset is 1 indicates that an index of a resource block to which the resource element of the first phase tracking reference signal belongs is 2M+1, where M≥0, and M is an integer.

In other words, when $K_{PT\text{-}RS}$ = 2, $N_{RB}$ is an even number, and $n_{RNTI}$ is an even number, $k_{ref}^{RB}=1$. This indicates that the index of the resource block to which the resource element of the first phase tracking reference signal belongs is 2M+1, where M≥0, and M is an integer. In this case, the first phase tracking reference signal may occupy resource blocks whose indexes are 1, 3, 5, 7, 9, ..., and ($N_{RB}$ - 1).

This case may also be understood with reference to FIG. 5.

(3) When the resource block density is equal to 2, $N_{RB}$ is an even number, and the radio network temporary identifier is an odd number, the resource block offset is 0. That the resource block offset is 0 indicates that an index of a resource block to which the first phase tracking reference signal belongs is 2M, where M≥0, and M is an integer.

In other words, when $K_{PT-RS}$ = 2, $N_{RB}$ is an even number, and $n_{RNTI}$ is an odd number, $k_{ref}^{RB}=0$. This indicates that the index of the resource block to which the first phase tracking reference signal belongs is 2M, where M≥0, and M is an integer. In this case, the first phase tracking reference signal may occupy resource blocks whose indexes are 0, 2, 4, 6, 8, ..., and ($N_{RB}$ - 2).

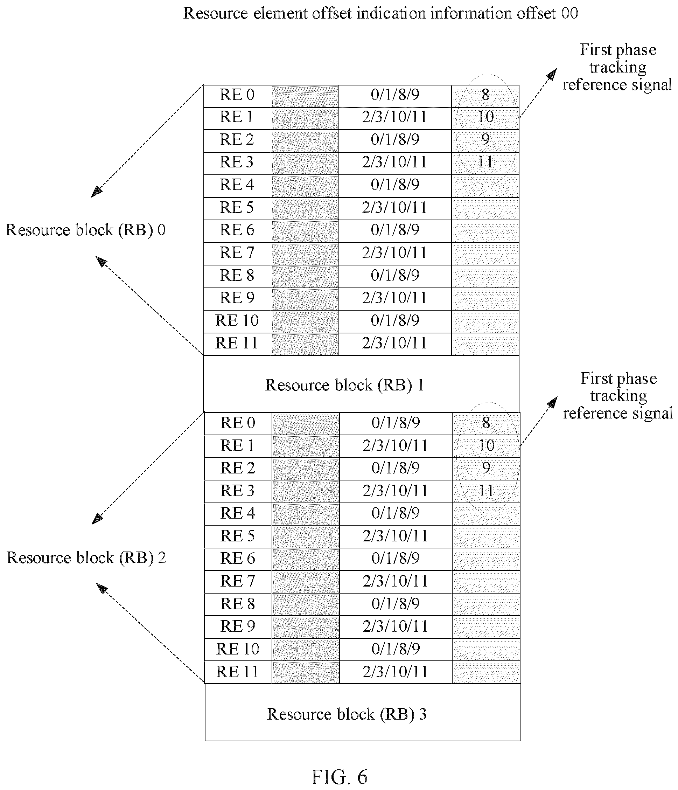

Refer to FIG. 6. First-type port numbers in uplink transmission are used as an example. When $k_{ref}^{RB} = 0$, and resource element offset indication information is offset 00, a first phase tracking reference signal corresponding to expanded port numbers that are 8, 9, 10, and 11 is mapped to resource blocks whose indexes are even numbers. In FIG. 6, four resource blocks are shown as an example. The first phase tracking reference signal is mapped to an RB 0 and an RB 2.

(4) When the resource block density indication information is equal to 4, $N_{RB}$ is an integer multiple of 4, and the radio network temporary identifier is a multiple of 4, the resource block offset is 2. That the resource block offset is 2 indicates that an index of a resource block to which the resource element of the first phase tracking reference signal belongs is 4M+2, where M≥0, and M is an integer.

In other words, when $K_{PT-RS}$ = 4, $N_{RB}$ is an integer multiple of 4, and $n_{RNTI}$ is a multiple of 4, $k_{ref}^{RB}=2$. This indicates that the index of the resource block to which the resource element of the first phase tracking reference signal belongs is 4M+2, where M≥0, and M is an integer. In this case, the first phase tracking reference signal may occupy resource blocks whose indexes are 2, 6, 10, ..., and ($N_{RB}$ - 2).

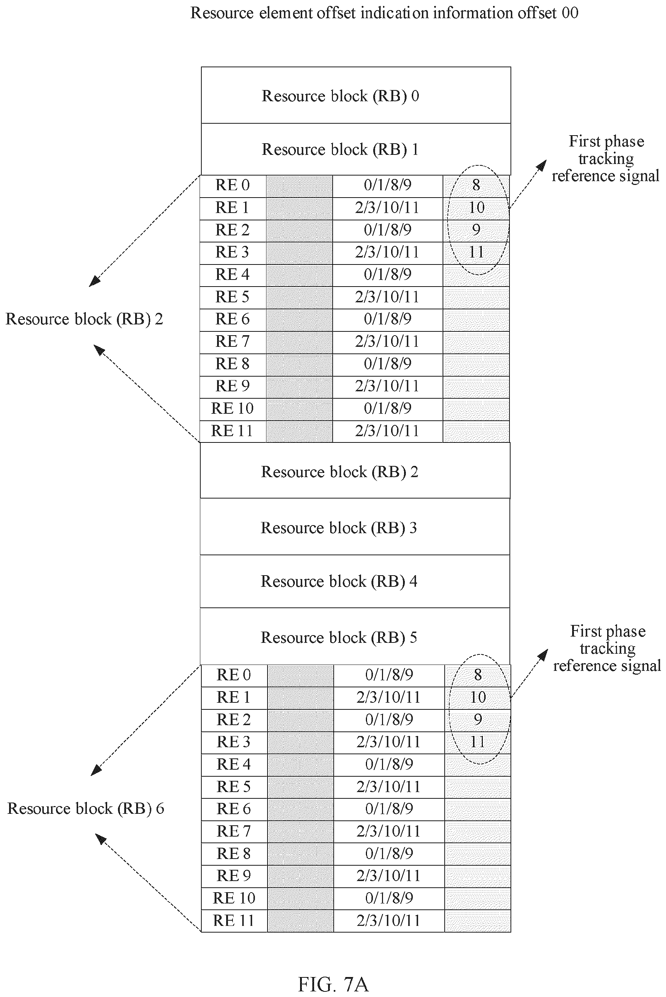

Refer to FIG. 7A. First-type port numbers in uplink transmission are used as an example. When $k_{ref}^{RB} = 2$, and resource element offset indication information is offset 00, a first phase tracking reference signal corresponding to expanded port numbers that are 8, 9, 10, and 11 is mapped to resource blocks whose indexes are 4M+2, where M≥0. In FIG. 7A, seven resource blocks are shown as an example. The first phase tracking reference signal is mapped to an RB 2 and an RB 6.

(5) When the resource block density indication information is equal to 4, $N_{RB}$ is an integer multiple of 4, and a modulus of the radio network temporary identifier that is set to 4 is 1, the resource block offset is 3. That the resource block offset is 3 indicates that an index of a resource block to which the resource element of the first phase tracking reference signal belongs is 4M+3, where M≥0, and M is an integer.

In other words, when $K_{PT-RS}$ = 4, $N_{RB}$ is an integer multiple of 4, and the modulus of $n_{RNTI}$ that is set to 4 is 1, $k_{ref}^{RB}=3$. This indicates that the index of the resource block to which the resource element of the first phase tracking reference signal belongs is 4M+3, where M≥0, and M is an integer. In this case, the first phase tracking reference signal may occupy resource blocks whose indexes are 3, 7, 11, ..., and ($N_{RB}$ - 1).

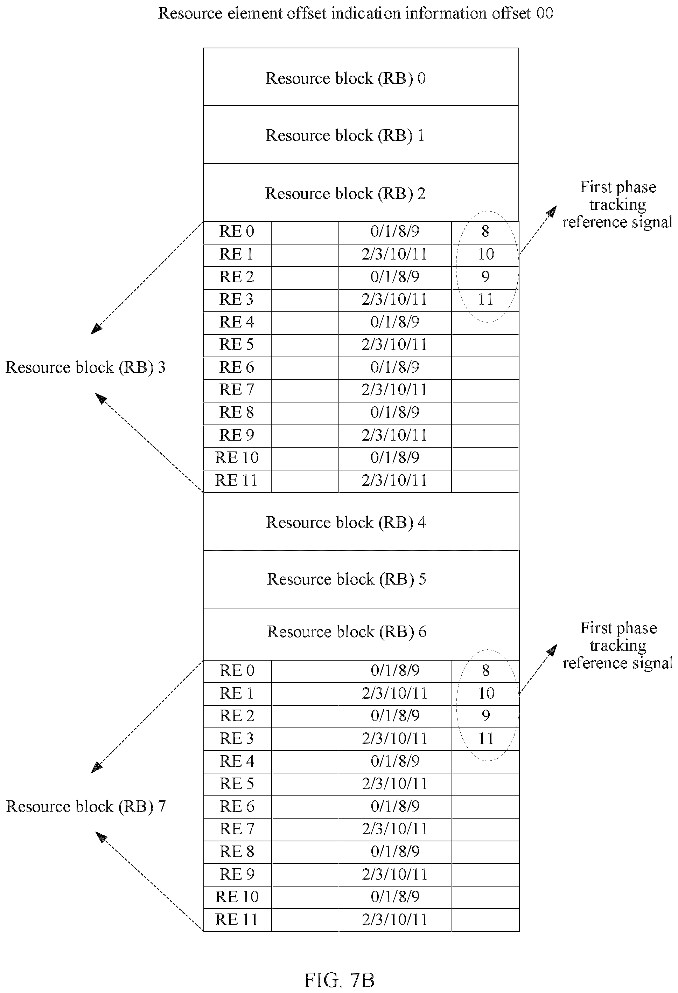

Refer to 7B. First-type port numbers in uplink transmission are used as an example. When $k_{ref}^{RB}=3$, and resource element offset indication information is offset 00, a first phase tracking reference signal corresponding to expanded port numbers that are 8, 9, 10, and 11 is mapped to resource blocks whose indexes are 4M+3, where M≥0. In FIG. 7B, eight resource blocks are shown as an example. The first phase tracking reference signal is mapped to an RB 3 and an RB 7.

(6) When the resource block density indication information is equal to 4, $N_{RB}$ is an integer multiple of 4, and a modulus of the radio network temporary identifier that is set to 4 is 2, the resource block offset is 0. That the resource block offset is 0 indicates that an index of a resource block to which the first phase tracking reference signal belongs is 4M, where M≥0, and M is an integer.

In other words, when $K_{PT-RS}$ = 4, $N_{RB}$ is an integer multiple of 4, and the modulus of $n_{RNTI}$ that is set to 4 is 2, $k_{ref}^{RB}=0$. This indicates that the index of the resource block to which the first phase tracking reference signal belongs is 4M, where M≥0, and M is an integer. In this case, the first phase tracking reference signal may occupy resource blocks whose indexes are 0, 4, 8, ..., and ($N_{RB}$ - 4).

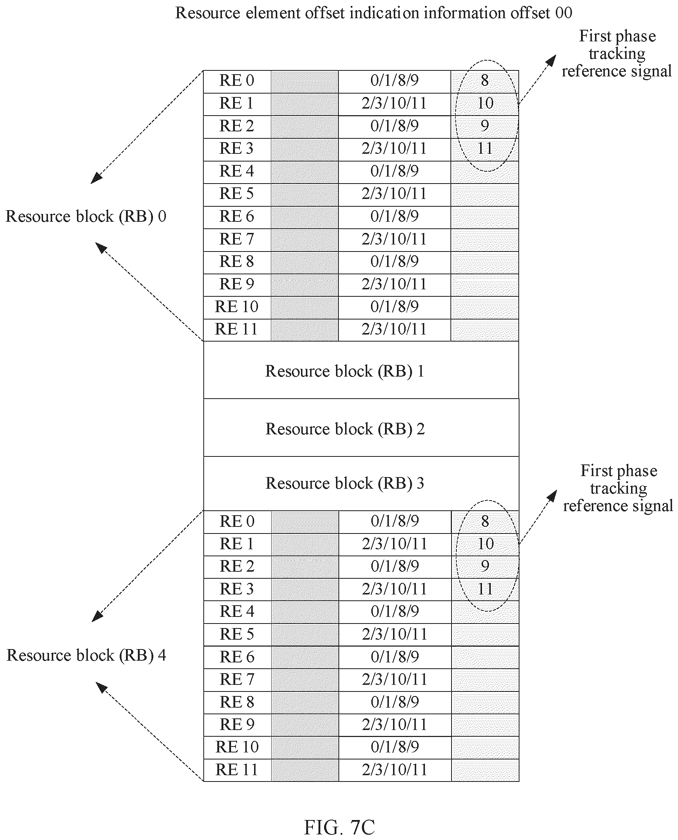

Refer to FIG. 7C. First-type port numbers in uplink transmission are used as an example. When $k_{ref}^{RB}=0$, and resource element offset indication information is offset 00, a first phase tracking reference signal corresponding to expanded port numbers that are 8, 9, 10, and 11 is mapped to resource blocks whose indexes are 4M, where M≥0. In FIG. 7C, five resource blocks are shown as an example. The first phase tracking reference signal is mapped to an RB 0 and an RB 4.

(7) When the resource block density indication information is equal to 4, $N_{RB}$ is an integer multiple of 4, and a modulus of the radio network temporary identifier that is set to 4 is 3, the resource block offset is 1. That the resource block offset is 1 indicates that an index of a resource block to which the resource element of the first phase tracking reference signal belongs is 4M+1, where M≥0, and M is an integer.

In other words, when $K_{PT-RS}$ = 4, $N_{RB}$ is an integer multiple of 4, and a modulus of $n_{RNTI}$ that is set to 4 is 3, $k_{ref}^{RB}=1$. This indicates that the index of the resource block to which the resource element of the first phase tracking reference signal belongs is 4M+1, where M≥0, and M is an integer. In this case, the first phase tracking reference signal may occupy resource blocks whose indexes are 1, 5, 9, ..., and ($N_{RB}$ - 3).

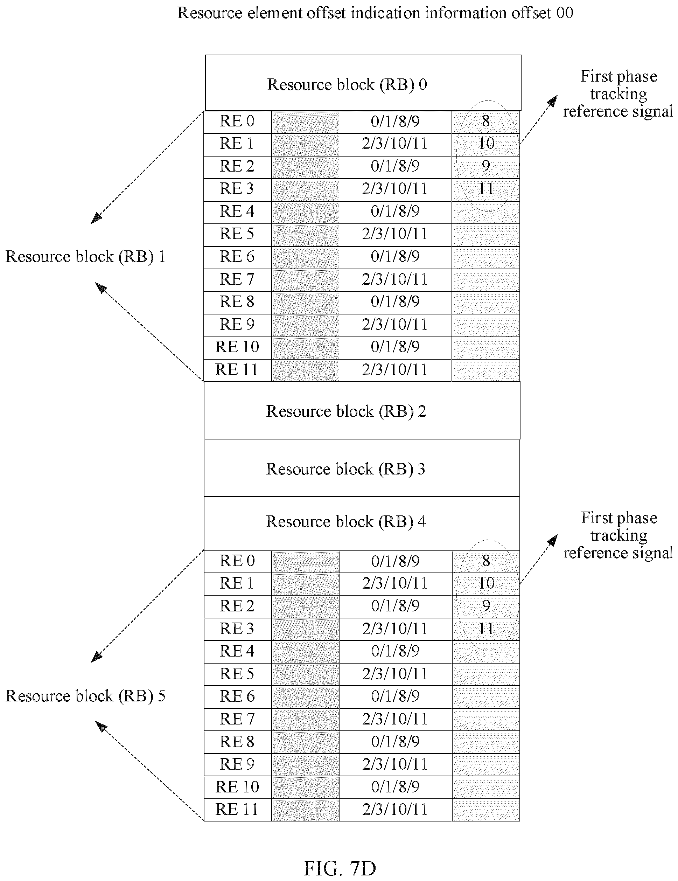

Refer to FIG. 7D. First-type port numbers in uplink transmission are used as an example. When $k_{ref}^{RB}=1$, and resource element offset indication information is offset 00, a first phase tracking reference signal corresponding to expanded port numbers that are 8, 9, 10, and 11 is mapped to resource blocks whose indexes are 4M, where M≥0. In FIG. 7D, six resource blocks are shown as an example. The first phase tracking reference signal is mapped to an RB 1 and an RB 5.

(8) When the resource block density indication information is equal to 4, and a modulus of $N_{RB}$ that is set to 4 is 1, the resource block offset is 2. That the resource block offset is 2 indicates that an index of a resource block to which the resource element of the first phase tracking reference signal belongs is 4M+2, where M≥0, and M is an integer.

In other words, when $K_{PT-RS}$ = 4, and the modulus of $N_{RB}$ that is set to 4 is 1, $k_{ref}^{RB}=2$. This indicates that the index of the resource block to which the resource element of the first phase tracking reference signal belongs is 4M+2, where M≥0, and M is an integer. In this case, the first phase tracking reference signal may occupy resource blocks whose indexes are 2, 6, 10, ..., and ($N_{RB}$ - 3).

In this case, for a diagram of a mapping position of the first phase tracking reference signal, refer to FIG. 7A for understanding.

(9) When the resource block density indication information is equal to 4, a modulus of $N_{RB}$ that is set to 4 is 2, and the radio network temporary identifier is an even number, the resource block offset is 2. That the resource block offset is 2 indicates that an index of a resource block to which the resource element of the first phase tracking reference signal belongs is 4M+2, where M≥0, and M is an integer.

In other words, when $K_{PT-RS}$ = 4, the modulus of $N_{RB}$ that is set to 4 is 2, and $n_{RNTI}$ is an even number, $k_{ref}^{RB}=2$. This indicates that the index of the resource block to which the resource element of the first phase tracking reference signal belongs is 4M+2, where M≥0, and M is an integer. In this case, the first phase tracking reference signal may occupy resource blocks whose indexes are 2, 6, 10, ..., and ($N_{RB}$ - 4).

In this case, for a diagram of a mapping position of the first phase tracking reference signal, refer to FIG. 7A for understanding.

(10) When the resource block density indication information is equal to 4, a modulus of $N_{RB}$ that is set to 4 is 2, and the radio network temporary identifier is an odd number, the resource block offset is 3. That the resource block offset is 3 indicates that an index of a resource block to which the resource element of the first phase tracking reference signal belongs is 4M+3, where M≥0, and M is an integer.

In other words, when $K_{PT-RS}$ = 4, the modulus of $N_{RB}$ that is set to 4 is 2, and $n_{RNTI}$ is an odd number, $k_{ref}^{RB}=3$. This indicates that the index of the resource block to which the resource element of the first phase tracking reference signal belongs is 4M+3, where M≥0, and M is an integer. In this case, the first phase tracking reference signal may occupy resource blocks whose indexes are 3, 7, 11, ..., and ($N_{RB}$ - 3).

In this case, for a diagram of a mapping position of the first phase tracking reference signal, refer to FIG. 7B for understanding.

(11) When the resource block density indication information is equal to 4, a modulus of $N_{RB}$ that is set to 4 is 3, and the radio network temporary identifier is an integer multiple of 3, the resource block offset is 2. That the resource block offset is 2 indicates that an index of a resource block to which the resource element of the first phase tracking reference signal belongs is 4M+2, where M≥0, and M is an integer.

In other words, when $K_{PT-RS}$ = 4, the modulus of $N_{RB}$ that is set to 4 is 3, and $n_{RNTI}$ is an integer multiple of 3, $k_{ref}^{RB}=2$ . This indicates that the index of the resource block to which the resource element of the first phase tracking reference signal belongs is 4M+2, where M≥0, and M is an integer. In this case, the first phase tracking reference signal may occupy resource blocks whose indexes are 2, 6, 10, ..., and ($N_{RB}$ - 1).

In this case, for a diagram of a mapping position of the first phase tracking reference signal, refer to FIG. 7A for understanding.

(12) When the resource block density indication information is equal to 4, a modulus of $N_{RB}$ that is set to 4 is 3, and a modulus of the radio network temporary identifier that is set to 3 is 1, the resource block offset is 3. That the resource block offset is 3 indicates that an index of a resource block to which the resource element of the first phase tracking reference signal belongs is 4M+3, where M≥0, and M is an integer.

In other words, when $K_{PT-RS}$ = 4, the modulus of $N_{RB}$ that is set to 4 is 3, and the modulus of $n_{RNTI}$ that is set to 3 is 1, $k_{ref}^{RB}=3$ . This indicates that the index of the resource block to which the resource element of the first phase tracking reference signal belongs is 4M+3, where M≥0, and M is an integer. In this case, the first phase tracking reference signal may occupy resource blocks whose indexes are 3, 7, 11, ..., and ($N_{RB}$ - 4).

In this case, for a diagram of a mapping position of the first phase tracking reference signal, refer to FIG. 7B for understanding.

(13) When the resource block density indication information is equal to 4, a modulus of $N_{RB}$ that is set to 4 is 3, and a modulus of the radio network temporary identifier that is set to 3 is 2, the resource block offset is 0. That the resource block offset is 0 indicates that an index of a resource block to which the first phase tracking reference signal belongs is 4M, where M≥0, and M is an integer.

In other words, when $K_{PT-RS}$ = 4, the modulus of $N_{RB}$ that is set to 4 is 3, and the modulus of $n_{RNTI}$ that is set to 3 is 2, $k_{ref}^{RB}=0$ . This indicates that the index of the resource block to which the first phase tracking reference signal belongs is 4M, where M≥0, and M is an integer. In this case, the first phase tracking reference signal may occupy resource blocks whose indexes are 0, 4, 8, ..., and ($N_{RB}$ - 3).

In this case, for a diagram of a mapping position of the first phase tracking reference signal, refer to FIG. 7C for understanding.

It should be noted that the value of $K_{PT-RS}$ is not limited to 2 and 4 listed above, and may alternatively be another value. This is not limited in this embodiment.

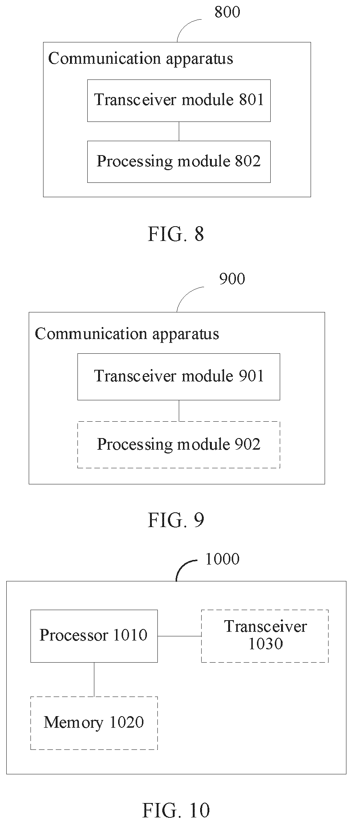

A communication apparatus provided in embodiments of this application is described below. FIG. 8 is a diagram of a structure of a communication apparatus according to an embodiment of this application. The communication apparatus 800 may be configured to perform the steps performed by the terminal device in embodiments shown in FIG. 2 to FIG. 7D. For details, refer to the related descriptions in the foregoing method embodiments.

The communication apparatus 800 includes a transceiver module 801 and a processing module 802. The transceiver module 801 may implement a corresponding communication function, and the processing module 802 is configured to perform data processing. The transceiver module 801 may also be referred to as a communication interface or a communication unit.

Optionally, the communication apparatus 800 may further include a storage unit. The storage unit may be configured to store instructions and/or data. The processing module 802 may read the instructions and/or the data in the storage unit, so that the communication apparatus implements the foregoing method embodiments.

The communication apparatus 800 may be configured to perform the operations performed by the terminal device in the foregoing method embodiments. The communication apparatus 800 may be a terminal device or a component that can be disposed in a terminal device. The transceiver module 801 is configured to perform a receiving-related operation on a terminal device side in the foregoing method embodiment, and the processing module 802 is configured to perform a processing-related operation on the terminal device side in the foregoing method embodiment.

Optionally, the transceiver module 801 may include a sending module and a receiving module. The sending module is configured to perform a sending operation in the foregoing method embodiment. The receiving module is configured to perform a receiving operation in the foregoing method embodiment.

It should be noted that the communication apparatus 800 may include the sending module, but not include the receiving module. Alternatively, the communication apparatus 800 may include the receiving module, but not include the sending module. This may be specifically determined depending on whether the foregoing solution performed by the communication apparatus 800 includes a sending action and a receiving action.

In an example, the communication apparatus 800 is configured to perform the operations performed by the terminal device in the embodiment shown in FIG. 2.

The transceiver module 801 is configured to receive configuration information, for example, a DMRS port number, from a network device.

The processing module 802 is configured to determine a resource element of a phase tracking reference signal based on a resource block offset and a resource element offset.

The transceiver module 801 is further configured to send or receive the phase tracking reference signal based on the resource element of the phase tracking reference signal.

It should be understood that a specific process in which the modules perform the foregoing corresponding steps is described in detail in the foregoing method embodiments. For brevity, details are not described herein again.

The processing module 802 in the foregoing embodiment may be implemented by at least one processor or a processor-related circuit. The transceiver module 801 may be implemented by a transceiver or a transceiver-related circuit. The transceiver module 801 may also be referred to as a communication unit or a communication interface. The storage unit may be implemented by at least one memory.

A communication apparatus provided in embodiments of this application is described below. FIG. 9 is a diagram of a structure of a communication apparatus according to an embodiment of this application. The communication apparatus 900 may be configured to perform the steps performed by the network device in the embodiment shown in FIG. 2. For details, refer to related descriptions in the foregoing method embodiments.

The communication apparatus 900 includes a transceiver module 901. Optionally, the communication apparatus 900 further includes a processing module 902. The transceiver module 901 may implement a corresponding communication function, and the processing module 902 is configured to perform data processing. The transceiver module 901 may also be referred to as a communication interface or a communication unit.

The communication apparatus 900 may be configured to perform the operations performed by the terminal device in the foregoing method embodiments. The communication apparatus 900 may be a network device or a component that can be disposed in a network device. The transceiver module 901 is configured to perform a receiving-related operation on a network device side in the foregoing method embodiment.

Optionally, the transceiver module 901 may include a sending module and a receiving module. The sending module is configured to perform a sending operation in the foregoing method embodiment. The receiving module is configured to perform a receiving operation in the foregoing method embodiment.

It should be noted that the communication apparatus 900 may include the sending module, but not include the receiving module. Alternatively, the communication apparatus 900 may include the receiving module, but not include the sending module. This may be specifically determined depending on whether the foregoing solution performed by the communication apparatus 900 includes a sending action and a receiving action.

In an example, the communication apparatus 900 is configured to perform the operations performed by the network device in the embodiment shown in FIG. 2.

The transceiver module 901 is configured to send configuration information, for example, a DMRS port number, to a terminal device.

The processing module 902 is configured to determine a resource element of a phase tracking reference signal based on a resource block offset and a resource element offset. The transceiver module 901 is further configured to send or receive the phase tracking reference signal based on the resource element of the phase tracking reference signal.

It should be understood that a specific process in which the modules perform the foregoing corresponding steps is described in detail in the foregoing method embodiments. For brevity, details are not described herein again.

The processing module 902 in the foregoing embodiment may be implemented by at least one processor or a processor-related circuit. The transceiver module 901 may be implemented by a transceiver or a transceiver-related circuit. The transceiver module 901 may also be referred to as a communication unit or a communication interface. The storage unit may be implemented by at least one memory.

An embodiment of this application further provides a communication apparatus 1000. The communication apparatus 1000 includes a processor 1010. The processor 1010 is coupled to a memory 1020. The memory 1020 is configured to store a computer program or instructions and/or data. The processor 1010 is configured to execute the computer program or the instructions and/or the data stored in the memory 1020, so that the method in the foregoing method embodiments is performed.

Optionally, the communication apparatus 1000 includes one or more processors 1010.

Optionally, as shown in FIG. 10, the communication apparatus 1000 may further include the memory 1020.

Optionally, the communication apparatus 1000 may include one or more memories 1020.

Optionally, the memory 1020 may be integrated with the processor 1010, or may be disposed separately from the processor 1010.

Optionally, as shown in FIG. 10, the communication apparatus 1000 may further include a transceiver 1030. The transceiver 1030 is configured to receive and/or send a signal. For example, the processor 1010 is configured to control the transceiver 1030 to receive and/or send a signal.

In a solution, the communication apparatus 1000 is configured to implement the operations performed by the terminal device in the foregoing method embodiments.

For example, the processor 1010 is configured to perform a processing-related operation performed by the terminal device in the foregoing method embodiment. The transceiver 1030 is configured to perform an operation related to receiving and sending that is performed by the terminal device in the foregoing method embodiment.

In another solution, the communication apparatus 1000 is configured to implement the operations performed by the network device in the foregoing method embodiments.

For example, the processor 1010 is configured to implement a processing-related operation performed by the network device in the foregoing method embodiment, and the transceiver 1030 is configured to implement an operation related to receiving and sending that is performed by the network device in the foregoing method embodiment.

An embodiment of this application further provides a communication apparatus 1100. The communication apparatus 1100 may be a terminal device or a chip. The communication apparatus 1100 may be configured to perform the operations performed by the terminal device in the foregoing method embodiments.

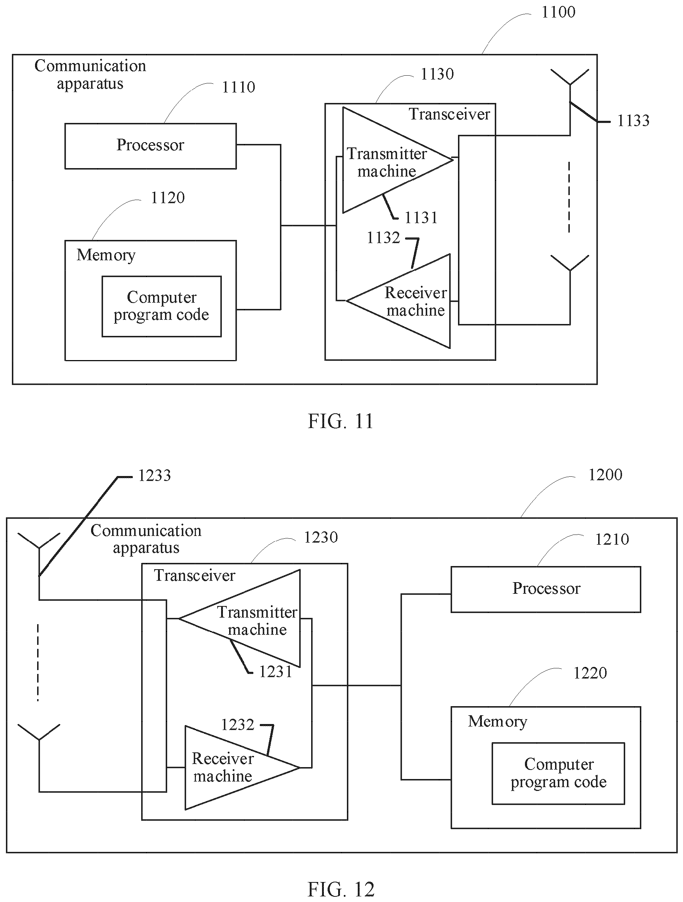

When the communication apparatus 1100 is the terminal device, FIG. 11 is a diagram of a simplified structure of the terminal device. As shown in FIG. 11, the terminal device includes a processor, a memory, and a transceiver. The memory may store computer program code. The transceiver includes a transmitter machine 1131, a receiver machine 1132, a radio frequency circuit (not shown), an antenna 1133, and an input/output apparatus (not shown). The processor is mainly configured to: process a communication protocol and communication data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in the form of an electromagnetic wave. The input/output apparatus, such as a touchscreen, a display, or a keyboard, is mainly configured to receive data input by a user and output data to the user. It should be noted that some types of terminal devices may not have the input/output apparatus.

When data needs to be sent, after performing baseband processing on the to-be-sent data, the processor outputs the baseband signal to the radio frequency circuit, and the radio frequency circuit performs radio frequency processing on the baseband signal and then sends the radio frequency signal to the outside in the form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 11 only shows one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In embodiments of this application, the antenna and the radio frequency circuit that have a transceiver function may be considered as a transceiver unit of the terminal device, and the processor that has a processing function may be considered as a processing unit of the terminal device.

As shown in FIG. 11, the terminal device includes a processor 1110, a memory 1120, and a transceiver 1130. The processor 1110 may also be referred to as a processing unit, a processing board, a processing module, a processing apparatus, or the like, and the transceiver 1130 may also be referred to as a transceiver unit, a transceiver machine, a transceiver apparatus, or the like.

Optionally, a component that is in the transceiver 1130 and that is configured to implement a receiving function may be considered as a receiving unit, and a component that is in the transceiver 1130 and that is configured to implement a sending function may be considered as a sending unit. In other words, the transceiver 1130 includes a receiver and a transmitter. The transceiver sometimes may also be referred to as a transceiver machine, a transceiver unit, a transceiver circuit, or the like. The receiver sometimes may also be referred to as a receiver machine, a receiving unit, a receiving circuit, or the like. The transmitter sometimes may also be referred to as a transmitter machine, a transmitting unit, a transmitting circuit, or the like.

For example, in an implementation, the processor 1110 is configured to perform the processing action on a terminal device side in the embodiment shown in FIG. 2, and the transceiver 1130 is configured to perform the receiving/sending action on the terminal device side in FIG. 2. For example, the transceiver 1130 is configured to perform the receiving/sending operation in step 201 and step 203 in the embodiment shown in FIG. 2. The processor 1110 is configured to perform the processing operation in step 202 in the embodiment shown in FIG. 2.

It should be understood that FIG. 11 is merely an example but not a limitation. The terminal device including the transceiver unit and the processing unit may not depend on the structure shown in FIG. 11.

When the communication apparatus 1100 is the chip, the chip includes a processor, a memory, and a transceiver. The transceiver may be an input/output circuit or a communication interface. The processor may be a processing unit, a microprocessor, or an integrated circuit integrated on the chip. The sending operation performed by the terminal device in the foregoing method embodiment may be understood as an output of the chip, and the receiving operation performed by the terminal device in the foregoing method embodiment may be understood as an input of the chip.

An embodiment of this application further provides a communication apparatus 1200. The communication apparatus 1200 may be a network device or a chip. The communication apparatus 1200 may be configured to perform the operations performed by the network device in the foregoing method embodiments.

When the communication apparatus 1200 is the network device, for example, a base station, FIG. 12 is a diagram of a simplified structure of the base station. The base station includes a part 1210, a part 1220, and a part 1230. The part 1210 is mainly configured to perform baseband processing, control the base station, and the like. The part 1210 is usually a control center of the base station, may be usually referred to as a processor, and is configured to control the base station to perform a processing operation on a network device side in the foregoing method embodiment. The part 1220 is mainly configured to store computer program code and data. The part 1230 is mainly configured to receive and send a radio frequency signal, and perform conversion between the radio frequency signal and a baseband signal. The part 1230 may be usually referred to as a transceiver unit, a transceiver machine, a transceiver circuit, a transceiver, or the like. The transceiver unit in the part 1230 may also be referred to as a transceiver machine, a transceiver, or the like, and includes an antenna 1233 and a radio frequency circuit (not shown). The radio frequency circuit is mainly configured to perform radio frequency processing. Optionally, a component that is in the part 1230 and that is configured to implement a receiving function may be considered as a receiver machine, and a component configured to implement a sending function may be considered as a transmitter machine. In other words, the part 1230 includes a receiver machine 1232 and a transmitter machine 1231. The receiver machine may also be referred to as a receiving unit, a receiver, a receiving circuit, or the like, and the transmitter machine may be referred to as a transmitting unit, a transmitter, a transmitting circuit, or the like.

The part 1210 and the part 1220 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, the plurality of boards may share one or more processors, or the plurality of boards share one or more memories, or the plurality of boards share one or more processors at the same time.

For example, in another implementation, the transceiver unit in the part 1230 is configured to perform the steps related to receiving and sending that are performed by the network device in the embodiment shown in FIG. 2. The processor in the part 1210 is configured to perform the processing-related step performed by the network device in the embodiment shown in FIG. 2.

It should be understood that FIG. 12 is merely an example rather than a limitation, and the network device including the processor, the memory, and the transceiver may not depend on the structure shown in FIG. 12.

When the communication apparatus 1200 is the chip, the chip includes a transceiver, a memory, and a processor. The transceiver may be an input/output circuit or a communication interface. The processor is a processor, a microprocessor, or an integrated circuit integrated on the chip. The sending operation performed by the network device in the foregoing method embodiment may be understood as an output of the chip, and the receiving operation performed by the network device in the foregoing method embodiment may be understood as an input of the chip.

An embodiment of this application further provides a computer-readable storage medium. The computer-readable storage medium stores computer instructions for implementing the method performed by the terminal device or the method performed by the network device in the foregoing method embodiments.

For example, when a computer program is executed by a computer, the computer is enabled to implement the method performed by the terminal device or the method performed by the network device in the foregoing method embodiments.

An embodiment of this application further provides a computer program product including instructions. When the instructions are executed by a computer, the computer is enabled to implement the method performed by the terminal device or the method performed by the network device in the foregoing method embodiments.

An embodiment of this application further provides a communication system. The communication system includes the network device and the terminal device in the foregoing embodiments.

An embodiment of this application further provides a chip apparatus, including a processor configured to invoke a computer degree or computer instructions stored in a memory, so that the processor performs the communication method in the embodiments shown in FIG. 2 to FIG. 7D.

In a possible implementation, an input of the chip apparatus corresponds to the receiving operation in the embodiments shown in FIG. 2 to FIG. 7D, and an output of the chip apparatus corresponds to the sending operation in the embodiments shown in FIG. 2 to FIG. 7D.

Optionally, the processor is coupled to the memory through an interface.

Optionally, the chip apparatus further includes the memory, and the memory stores the computer degree or the computer instructions.

The processor mentioned above may be a general-purpose central processing unit, a microprocessor, an application-specific integrated circuit (application-specific integrated circuit, ASIC), or one or more integrated circuits configured to control program execution of the communication method in the embodiments shown in FIG. 2 to FIG. 7D. The memory mentioned above may be a read-only memory (read-only memory, ROM), another type of static storage device that can store static information and instructions, a random access memory (random access memory, RAM), or the like.

It may be clearly understood by a person skilled in the art that, for convenient and brief description, for explanations and beneficial effects of related content in any one of the communication apparatuses provided above, refer to the corresponding method embodiment provided above. Details are not described herein again.

In embodiments of this application, the terminal device or the network device may include a hardware layer, an operating system layer running on the hardware layer, and an application layer running on the operating system layer. The hardware layer may include hardware such as a central processing unit (central processing unit, CPU), a memory management unit (memory management unit, MMU), and an internal memory (also referred to as a main memory). An operating system at the operating system layer may be any one or more computer operating systems that implement service processing by using a process (process), for example, a Linux operating system, a Unix operating system, an Android operating system, an iOS operating system, or a Windows operating system. The application layer may include applications such as a browser, an address book, word processing software, and instant messaging software.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in the form of hardware, or may be implemented in the form of a software functional unit.

When the integrated unit is implemented in the form of the software functional unit and sold or used as an independent product, the integrated unit may be stored in a computer-readable storage medium. Based on such an understanding, a part that essentially contributes to the technical solutions of this application or all or some of the technical solutions may be implemented in the form of a software product. The computer software product is stored in a storage medium, and includes several instructions for enabling a computer device (which may be a personal computer, a server, a network device, or the like) to perform all or some steps of the methods in embodiments of this application. The foregoing storage medium includes any medium that can store program code, such as a USB flash drive, a removable hard disk, a read-only memory, a random access memory, a magnetic disk, or an optical disc.

In conclusion, the foregoing embodiments are merely intended to describe the technical solutions of this application, but not to limit this application. Although this application is described in detail with reference to the foregoing embodiments, a person of ordinary skill in the art should understand that the technical solutions described in the foregoing embodiments may still be modified, or some technical features in the technical solutions may be equivalently replaced. These modifications or replacements do not make the essence of the corresponding technical solutions fall outside the scope of the technical solutions of embodiments of this application.

**Claims**

1. A communication method, comprising:

   obtaining a demodulation reference signal port number, wherein the demodulation reference signal port number is for determining a resource block offset and a resource element offset;
   determining a resource element of a phase tracking reference signal based on the resource block offset and the resource element offset; and
   sending or receiving the phase tracking reference signal based on the resource element of the phase tracking reference signal.

2. The method according to claim 1, wherein the method further comprises:

obtaining a radio network temporary identifier of a terminal device, wherein the demodulation reference signal port number and the radio network temporary identifier are for determining the resource block offset.

3. The method according to claim 2, wherein the method further comprises:
obtaining resource element offset indication information, wherein the demodulation reference signal port number and the resource element offset indication information are for determining the resource element offset.

4. The method according to claim 3, wherein the method further comprises:
obtaining a demodulation reference signal configuration type, wherein the demodulation reference signal port number and the demodulation reference signal configuration type are for determining the resource block offset and the resource element offset.

5. The method according to claim 4, wherein the method further comprises:
obtaining $N_{RB}$ resource blocks used for data transmission and resource block density indication information of the phase tracking reference signal, wherein $N_{RB}$ is an integer greater than 1, indexes of the $N_{RB}$ resource blocks are 0, 1, ..., and ($N_{RB}$-1), the resource block density indication information indicates resource block density of the phase tracking reference signal, and $N_{RB}$ and the resource block density are for determining the resource block offset.

6. The method according to any one of claims 1 to 4, wherein the method further comprises:
obtaining $N_{RB}$ resource blocks used for data transmission, wherein when $N_{RB}$=1, the resource block offset is 0.

7. The method according to claim 5, wherein during downlink transmission,

the phase tracking reference signal is a first phase tracking reference signal or a second phase tracking reference signal;
the first phase tracking reference signal is a phase tracking reference signal corresponding to a port whose demodulation reference signal configuration type is a first type and whose demodulation reference signal port number is greater than or equal to 1008, or a corresponding phase tracking reference signal whose demodulation reference signal configuration type is a second type and whose demodulation reference signal port number is greater than or equal to 1012; and
the second phase tracking reference signal is a phase tracking reference signal corresponding to a port whose demodulation reference signal configuration type is the first type and whose demodulation reference signal port number is smaller than 1008, or a phase tracking reference signal corresponding to a port whose demodulation reference signal configuration type is the second type and whose demodulation reference signal port number is smaller than 1012.

8. The method according to claim 5, wherein during uplink transmission,

the phase tracking reference signal is a first phase tracking reference signal or a second phase tracking reference signal;
the first phase tracking reference signal is a phase tracking reference signal corresponding to a port whose demodulation reference signal configuration type is a first type and whose demodulation reference signal port number is greater than or equal to 8, or a phase tracking reference signal corresponding to a port whose demodulation reference signal configuration type is a second type and whose demodulation reference signal port number is greater than or equal to 12; and
the second phase tracking reference signal is a phase tracking reference signal corresponding to a port whose demodulation reference signal configuration type is the first type and whose demodulation reference signal port number is smaller than 8, or a phase tracking reference signal corresponding to a port whose demodulation reference signal configuration type is the second type and whose demodulation reference signal port number is smaller than 12.

9. The method according to claim 7 or 8, wherein the resource block offset comprises a first offset parameter and a second offset parameter; and
the first offset parameter and the second offset parameter are for determining a resource element of the first phase tracking reference signal and a resource element of the second phase tracking reference signal.

10. The method according to claim 9, wherein the determining a resource element of a phase tracking reference signal based on the resource block offset and the resource element offset comprises:

determining the resource element of the first phase tracking reference signal and/or the resource element of the second phase tracking reference signal by using a first relational expression, wherein the first relational expression is:

$$k = k_{ref}^{RE} + (iK_{PT-RS} + k_{ref}^{RB} + k_{offset}^{RB})N_{RB}^{SC},$$

wherein

$k$ is an index of the resource element of the first phase tracking reference signal and/or an index of the resource element of the second phase tracking reference signal, $i$ is a natural number, $N_{RB}^{SC}$ is a quantity of subcarriers in one resource block, $K_{PT-RS}$ is the resource block density, $k_{ref}^{RB}$ is the first offset parameter, $k_{offset}^{RB}$ is the second offset parameter, and $k_{ref}^{RE}$ is the resource element offset, wherein

$$k_{ref}^{RB} = \begin{cases} n_{RNTI} \bmod K_{PT-RS}, if \ N_{RB} \bmod K_{PT-RS} = 0 \\ n_{RNTI} \bmod (N_{RB} \bmod K_{PT-RS}), otherwise \end{cases},$$

wherein

$n_{RNTI}$ is the radio network temporary identifier, $mod$ represents a modulo operation, and $N_{RB}$ is the quantity of the resource blocks.

11. The method according to claim 10, wherein

when $K_{PT\text{-}RS}$ = 2, if $k_{ref}^{RB} = 0$, $k_{offset}^{RB} = 1$; and if $k_{ref}^{RB} = 1$, $k_{offset}^{RB} = -1$; and
when $K_{PT\text{-}RS}$ = 4, if $k_{ref}^{RB} = 0$ or 1, $k_{offset}^{RB} = 2$; and if $k_{ref}^{RB} = 2$ or 3, $k_{offset}^{RB} = -2$, wherein $k$ is the index of the resource element of the first phase tracking reference signal.

12. The method according to claim 10, wherein $k_{offset}^{RB} = 0$, $k$ is the index of the resource element of the second phase tracking reference signal.

13. The method according to any one of claims 9 to 11, wherein when the resource block density is equal to 2, and $N_{RB}$ is an odd number, the second offset parameter is 1, wherein that the second offset parameter is 1 indicates that an index of a resource block to which the resource element of the first phase tracking reference signal belongs is 2M+1, and indicates that an index of a resource block to which the resource element of the second phase tracking reference signal belongs is 2M, wherein M≥0, and M is an integer.

14. The method according to any one of claims 9 to 11, wherein when the resource block density is equal to 2, $N_{RB}$ is an even number, and the radio network temporary identifier is an odd number, the second offset parameter is -1, wherein that the second offset parameter is -1 indicates that an index of a resource block to which the resource element of the first phase tracking reference signal belongs is 2M, and indicates that an index of a resource block to which the resource element of the second phase tracking reference signal belongs is 2M+1, wherein M≥0, and M is an integer.

15. The method according to any one of claims 9 to 11, wherein when the resource block density is equal to 2, $N_{RB}$ is an even number, and the radio network temporary identifier is an even number, the second offset parameter is 1, wherein that the second offset parameter is 1 indicates that an index of a resource block to which the resource element of the first phase tracking reference signal belongs is 2M+1, and indicates that an index of a resource block to which the resource element of the second phase tracking reference signal belongs is 2M, wherein M≥0, and M is an integer.

16. The method according to claim 7 or 8, wherein the determining a resource element of a phase tracking reference signal based on the resource block offset and the resource element offset comprises:

determining a resource element of the first phase tracking reference signal by using a second relational expression, wherein
the second relational expression is:

$$k = k_{ref}^{RE} + (iK_{PT-RS} + k_{ref}^{RB})N_{RB}^{SC},$$

wherein

k is an index of the resource element of the first phase tracking reference signal, i is a natural number, $N_{RB}^{SC}$ is a quantity of subcarriers in one resource block, $K_{PT-RS}$ is the resource block density, $k_{ref}^{RB}$ is the resource block offset, and $k_{ref}^{RE}$ is the resource element offset, wherein
if $K_{PT-RS}$ = 2,

$$k_{ref}^{RB} = \begin{cases} 0, if N_{RB} \ mod \ 2 = 0 \ and \ n_{RNTI} \ mod \ 2 = 1 \\ 1, otherwise \end{cases};$$

if $K_{PT-RS}$ = 4 and $N_{RB}$ mod 4 = 0,

$$k_{ref}^{RB} = \begin{cases} 2, if \ n_{RNTI} \ mod \ 4=0 \\ 3, if \ n_{RNTI} \ mod \ 4=1 \\ 0, if \ n_{RNTI} \ mod \ 4=2 \\ 1, if \ n_{RNTI} \ mod \ 4=3 \end{cases};$$

if $K_{PT-RS}$ = 4 and $N_{RB}$ mod 4 = 1, $k_{ref}^{RB} = 2$;
if $K_{PT-RS}$ = 4 and $N_{RB}$ mod 4 = 2,

$$k_{ref}^{RB} = \begin{cases} 2, if \ n_{RNTI} \ mod \ 2=0 \\ 3, if \ n_{RNTI} \ mod \ 2=1 \end{cases};$$

and
if $K_{PT-RS}$ = 4 and $N_{RB}$ mod 4 = 3,

$$k_{ref}^{RB} = \begin{cases} 2, if \ n_{RNTI} \ mod \ 3 = 0 \\ 3, if \ n_{RNTI} \ mod \ 3 = 1 \\ 0, if \ n_{RNTI} \ mod \ 3 = 2 \end{cases}$$

wherein
$n_{RNTI}$ is the radio network temporary identifier, *mod* represents a modulo operation, and $N_{RB}$ is the quantity of the resource blocks.

17. The method according to claim 7, 8, or 16, wherein when the resource block density is equal to 2, and $N_{RB}$ is an odd number, the resource block offset is 1, wherein that the resource block offset is 1 indicates that an index of a resource block to which the resource element of the first phase tracking reference signal belongs is 2M+1, wherein M≥0, and M is an integer.

18. The method according to claim 7, 8, or 16, wherein the resource block density is equal to 2, $N_{RB}$ is an even number, and when the radio network temporary identifier is an even number, the resource block offset is 1, wherein that the resource block offset is 1 indicates that an index of a resource block to which the resource element of the first phase tracking reference signal belongs is 2M+1, wherein M≥0, and M is an integer.

19. The method according to claim 7, 8, or 16, wherein when the resource block density is equal to 2, $N_{RB}$ is an even number, and the radio network temporary identifier is an odd number, the resource block offset is 0, wherein that the resource block offset is 0 indicates that an index of a resource block to which the first phase tracking reference signal belongs is 2M, wherein M≥0, and M is an integer.

20. A communication apparatus, wherein the communication apparatus comprises a transceiver module and a processing module, the transceiver module is configured to perform a receiving/sending operation in the method according to any one of claims 1 to 19, and the processing module is configured to perform a processing operation in the method according to any one of claims 1 to 19.

21. A communication apparatus, wherein the communication apparatus comprises:

    a memory, configured to store computer instructions; and
    a processor, configured to execute a computer program or the computer instructions stored in the memory, to enable the communication apparatus to perform the method according to any one of claims 1 to 19.

22. A computer-readable storage medium, wherein the computer-readable storage medium stores a computer program, and when the computer program is executed by a communication apparatus, the communication apparatus is enabled to perform the method according to any one of claims 1 to 19.

23. A computer program product comprising instructions, wherein when the computer program product runs on a computer, the computer is enabled to perform the method according to any one of claims 1 to 19.

FIG. 1

A communication apparatus obtains a demodulation reference signal port number, where the demodulation reference signal port number is for determining a resource block offset and a resource element offset ⟋ 201

The communication apparatus determines a resource element of a phase tracking reference signal based on the resource block offset and the resource element offset ⟋ 202

The communication apparatus sends or receives the phase tracking reference signal based on the resource element of the phase tracking reference signal ⟋ 203

FIG. 2

Resource element offset indication information offset 00

| | | | | |
|---|---|---|---|---|
| RE 0 | | 0/1/8/9 | 0 | |
| RE 1 | | 2/3/10/11 | 2 | |
| RE 2 | | 0/1/8/9 | 1 | |
| RE 3 | | 2/3/10/11 | 3 | |
| RE 4 | | 0/1/8/9 | | |
| RE 5 | | 2/3/10/11 | | |
| RE 6 | | 0/1/8/9 | | |
| RE 7 | | 2/3/10/11 | | |
| RE 8 | | 0/1/8/9 | | |
| RE 9 | | 2/3/10/11 | | |
| RE 10 | | 0/1/8/9 | | |
| RE 11 | | 2/3/10/11 | | |
| RE 0 | | 0/1/8/9 | 8 | |
| RE 1 | | 2/3/10/11 | 10 | |
| RE 2 | | 0/1/8/9 | 9 | |
| RE 3 | | 2/3/10/11 | 11 | |
| RE 4 | | 0/1/8/9 | | |
| RE 5 | | 2/3/10/11 | | |
| RE 6 | | 0/1/8/9 | | |
| RE 7 | | 2/3/10/11 | | |
| RE 8 | | 0/1/8/9 | | |
| RE 9 | | 2/3/10/11 | | |
| RE 10 | | 0/1/8/9 | | |
| RE 11 | | 2/3/10/11 | | |

Resource block (RB) X

Resource block (RB) Y

Second phase tracking reference signal

First phase tracking reference signal

FIG. 3A

Resource element offset indication information offset 01

| | | | |
|---|---|---|---|
| RE 0 | | 0/1/8/9 | |
| RE 1 | | 2/3/10/11 | |
| RE 2 | | 0/1/8/9 | 0 |
| RE 3 | | 2/3/10/11 | 2 |
| RE 4 | | 0/1/8/9 | 1 |
| RE 5 | | 2/3/10/11 | 3 |
| RE 6 | | 0/1/8/9 | |
| RE 7 | | 2/3/10/11 | |
| RE 8 | | 0/1/8/9 | |
| RE 9 | | 2/3/10/11 | |
| RE 10 | | 0/1/8/9 | |
| RE 11 | | 2/3/10/11 | |
| RE 0 | | 0/1/8/9 | |
| RE 1 | | 2/3/10/11 | |
| RE 2 | | 0/1/8/9 | 8 |
| RE 3 | | 2/3/10/11 | 10 |
| RE 4 | | 0/1/8/9 | 9 |
| RE 5 | | 2/3/10/11 | 11 |
| RE 6 | | 0/1/8/9 | |
| RE 7 | | 2/3/10/11 | |
| RE 8 | | 0/1/8/9 | |
| RE 9 | | 2/3/10/11 | |
| RE 10 | | 0/1/8/9 | |
| RE 11 | | 2/3/10/11 | |

Resource block (RB) X

Resource block (RB) Y

Second phase tracking reference signal

First phase tracking reference signal

FIG. 3B

Resource element offset indication information offset 10

| | | | |
|---|---|---|---|
| RE 0 | | 0/1/8/9 | |
| RE 1 | | 2/3/10/11 | |
| RE 2 | | 0/1/8/9 | |
| RE 3 | | 2/3/10/11 | |
| RE 4 | | 0/1/8/9 | 0 |
| RE 5 | | 2/3/10/11 | 2 |
| RE 6 | | 0/1/8/9 | 1 |
| RE 7 | | 2/3/10/11 | 3 |
| RE 8 | | 0/1/8/9 | |
| RE 9 | | 2/3/10/11 | |
| RE 10 | | 0/1/8/9 | |
| RE 11 | | 2/3/10/11 | |
| RE 0 | | 0/1/8/9 | |
| RE 1 | | 2/3/10/11 | |
| RE 2 | | 0/1/8/9 | |
| RE 3 | | 2/3/10/11 | |
| RE 4 | | 0/1/8/9 | 8 |
| RE 5 | | 2/3/10/11 | 10 |
| RE 6 | | 0/1/8/9 | 9 |
| RE 7 | | 2/3/10/11 | 11 |
| RE 8 | | 0/1/8/9 | |
| RE 9 | | 2/3/10/11 | |
| RE 10 | | 0/1/8/9 | |
| RE 11 | | 2/3/10/11 | |

Resource block (RB) X

Resource block (RB) Y

Second phase tracking reference signal

First phase tracking reference signal

FIG. 3C

Resource element offset indication information offset 11

| | | | |
|---|---|---|---|
| RE 0 | | 0/1/8/9 | |
| RE 1 | | 2/3/10/11 | |
| RE 2 | | 0/1/8/9 | |
| RE 3 | | 2/3/10/11 | |
| RE 4 | | 0/1/8/9 | |
| RE 5 | | 2/3/10/11 | |
| RE 6 | | 0/1/8/9 | 0 |
| RE 7 | | 2/3/10/11 | 2 |
| RE 8 | | 0/1/8/9 | 1 |
| RE 9 | | 2/3/10/11 | 3 |
| RE 10 | | 0/1/8/9 | |
| RE 11 | | 2/3/10/11 | |
| RE 0 | | 0/1/8/9 | |
| RE 1 | | 2/3/10/11 | |
| RE 2 | | 0/1/8/9 | |
| RE 3 | | 2/3/10/11 | |
| RE 4 | | 0/1/8/9 | |
| RE 5 | | 2/3/10/11 | |
| RE 6 | | 0/1/8/9 | 8 |
| RE 7 | | 2/3/10/11 | 10 |
| RE 8 | | 0/1/8/9 | 9 |
| RE 9 | | 2/3/10/11 | 11 |
| RE 10 | | 0/1/8/9 | |
| RE 11 | | 2/3/10/11 | |

Resource block (RB) X

Resource block (RB) Y

Second phase tracking reference signal

First phase tracking reference signal

FIG. 3D

Resource element offset indication information offset 00

| | | | | Second phase tracking reference signal |
|---|---|---|---|---|
| RE 0 | | 0/1/8/9 | 0 | |
| RE 1 | | 2/3/10/11 | 2 | |
| RE 2 | | 0/1/8/9 | 1 | |
| RE 3 | | 2/3/10/11 | 3 | |
| RE 4 | | 0/1/8/9 | | |
| RE 5 | | 2/3/10/11 | | |
| RE 6 | | 0/1/8/9 | | |
| RE 7 | | 2/3/10/11 | | |
| RE 8 | | 0/1/8/9 | | |
| RE 9 | | 2/3/10/11 | | |
| RE 10 | | 0/1/8/9 | | |
| RE 11 | | 2/3/10/11 | | |

Resource block (RB) X

Resource block (RB) X+1

| | | | | First phase tracking reference signal |
|---|---|---|---|---|
| RE 0 | | 0/1/8/9 | 8 | |
| RE 1 | | 2/3/10/11 | 10 | |
| RE 2 | | 0/1/8/9 | 9 | |
| RE 3 | | 2/3/10/11 | 11 | |
| RE 4 | | 0/1/8/9 | | |
| RE 5 | | 2/3/10/11 | | |
| RE 6 | | 0/1/8/9 | | |
| RE 7 | | 2/3/10/11 | | |
| RE 8 | | 0/1/8/9 | | |
| RE 9 | | 2/3/10/11 | | |
| RE 10 | | 0/1/8/9 | | |
| RE 11 | | 2/3/10/11 | | |

Resource block (RB) Y

FIG. 4

Resource element offset indication information offset 00

| Resource block (RB) 0 | | | |
|---|---|---|---|
| RE 0 | | 0/1/8/9 | 8 |
| RE 1 | | 2/3/10/11 | 10 |
| RE 2 | | 0/1/8/9 | 9 |
| RE 3 | | 2/3/10/11 | 11 |
| RE 4 | | 0/1/8/9 | |
| RE 5 | | 2/3/10/11 | |
| RE 6 | | 0/1/8/9 | |
| RE 7 | | 2/3/10/11 | |
| RE 8 | | 0/1/8/9 | |
| RE 9 | | 2/3/10/11 | |
| RE 10 | | 0/1/8/9 | |
| RE 11 | | 2/3/10/11 | |

First phase tracking reference signal

Resource block (RB) 1

| Resource block (RB) 2 | | | |
|---|---|---|---|
| RE 0 | | 0/1/8/9 | 8 |
| RE 1 | | 2/3/10/11 | 10 |
| RE 2 | | 0/1/8/9 | 9 |
| RE 3 | | 2/3/10/11 | 11 |
| RE 4 | | 0/1/8/9 | |
| RE 5 | | 2/3/10/11 | |
| RE 6 | | 0/1/8/9 | |
| RE 7 | | 2/3/10/11 | |
| RE 8 | | 0/1/8/9 | |
| RE 9 | | 2/3/10/11 | |
| RE 10 | | 0/1/8/9 | |
| RE 11 | | 2/3/10/11 | |

First phase tracking reference signal

Resource block (RB) 3

FIG. 5

Resource element offset indication information offset 00

First phase tracking reference signal

| RE 0 | | 0/1/8/9 | 8 |
|------|--|---------|---|
| RE 1 | | 2/3/10/11 | 10 |
| RE 2 | | 0/1/8/9 | 9 |
| RE 3 | | 2/3/10/11 | 11 |
| RE 4 | | 0/1/8/9 | |
| RE 5 | | 2/3/10/11 | |
| RE 6 | | 0/1/8/9 | |
| RE 7 | | 2/3/10/11 | |
| RE 8 | | 0/1/8/9 | |
| RE 9 | | 2/3/10/11 | |
| RE 10 | | 0/1/8/9 | |
| RE 11 | | 2/3/10/11 | |

Resource block (RB) 0

Resource block (RB) 1

First phase tracking reference signal

| RE 0 | | 0/1/8/9 | 8 |
|------|--|---------|---|
| RE 1 | | 2/3/10/11 | 10 |
| RE 2 | | 0/1/8/9 | 9 |
| RE 3 | | 2/3/10/11 | 11 |
| RE 4 | | 0/1/8/9 | |
| RE 5 | | 2/3/10/11 | |
| RE 6 | | 0/1/8/9 | |
| RE 7 | | 2/3/10/11 | |
| RE 8 | | 0/1/8/9 | |
| RE 9 | | 2/3/10/11 | |
| RE 10 | | 0/1/8/9 | |
| RE 11 | | 2/3/10/11 | |

Resource block (RB) 2

Resource block (RB) 3

FIG. 6

Resource element offset indication information offset 00

| Resource block (RB) 0 | | | |
|---|---|---|---|
| Resource block (RB) 1 | | | |
| RE 0 | | 0/1/8/9 | 8 |
| RE 1 | | 2/3/10/11 | 10 |
| RE 2 | | 0/1/8/9 | 9 |
| RE 3 | | 2/3/10/11 | 11 |
| RE 4 | | 0/1/8/9 | |
| RE 5 | | 2/3/10/11 | |
| RE 6 | | 0/1/8/9 | |
| RE 7 | | 2/3/10/11 | |
| RE 8 | | 0/1/8/9 | |
| RE 9 | | 2/3/10/11 | |
| RE 10 | | 0/1/8/9 | |
| RE 11 | | 2/3/10/11 | |
| Resource block (RB) 2 | | | |
| Resource block (RB) 3 | | | |
| Resource block (RB) 4 | | | |
| Resource block (RB) 5 | | | |
| RE 0 | | 0/1/8/9 | 8 |
| RE 1 | | 2/3/10/11 | 10 |
| RE 2 | | 0/1/8/9 | 9 |
| RE 3 | | 2/3/10/11 | 11 |
| RE 4 | | 0/1/8/9 | |
| RE 5 | | 2/3/10/11 | |
| RE 6 | | 0/1/8/9 | |
| RE 7 | | 2/3/10/11 | |
| RE 8 | | 0/1/8/9 | |
| RE 9 | | 2/3/10/11 | |
| RE 10 | | 0/1/8/9 | |
| RE 11 | | 2/3/10/11 | |

First phase tracking reference signal

Resource block (RB) 2

Resource block (RB) 6

FIG. 7A

Resource element offset indication information offset 00

| Resource block (RB) 0 | | | |
|---|---|---|---|
| Resource block (RB) 1 | | | |
| Resource block (RB) 2 | | | |
| RE 0 | | 0/1/8/9 | 8 |
| RE 1 | | 2/3/10/11 | 10 |
| RE 2 | | 0/1/8/9 | 9 |
| RE 3 | | 2/3/10/11 | 11 |
| RE 4 | | 0/1/8/9 | |
| RE 5 | | 2/3/10/11 | |
| RE 6 | | 0/1/8/9 | |
| RE 7 | | 2/3/10/11 | |
| RE 8 | | 0/1/8/9 | |
| RE 9 | | 2/3/10/11 | |
| RE 10 | | 0/1/8/9 | |
| RE 11 | | 2/3/10/11 | |
| Resource block (RB) 4 | | | |
| Resource block (RB) 5 | | | |
| Resource block (RB) 6 | | | |
| RE 0 | | 0/1/8/9 | 8 |
| RE 1 | | 2/3/10/11 | 10 |
| RE 2 | | 0/1/8/9 | 9 |
| RE 3 | | 2/3/10/11 | 11 |
| RE 4 | | 0/1/8/9 | |
| RE 5 | | 2/3/10/11 | |
| RE 6 | | 0/1/8/9 | |
| RE 7 | | 2/3/10/11 | |
| RE 8 | | 0/1/8/9 | |
| RE 9 | | 2/3/10/11 | |
| RE 10 | | 0/1/8/9 | |
| RE 11 | | 2/3/10/11 | |

Resource block (RB) 3

First phase tracking reference signal

Resource block (RB) 7

First phase tracking reference signal

FIG. 7B

Resource element offset indication information offset 00

First phase tracking reference signal

| | | | |
|---|---|---|---|
| RE 0 | | 0/1/8/9 | 8 |
| RE 1 | | 2/3/10/11 | 10 |
| RE 2 | | 0/1/8/9 | 9 |
| RE 3 | | 2/3/10/11 | 11 |
| RE 4 | | 0/1/8/9 | |
| RE 5 | | 2/3/10/11 | |
| RE 6 | | 0/1/8/9 | |
| RE 7 | | 2/3/10/11 | |
| RE 8 | | 0/1/8/9 | |
| RE 9 | | 2/3/10/11 | |
| RE 10 | | 0/1/8/9 | |
| RE 11 | | 2/3/10/11 | |

Resource block (RB) 0

Resource block (RB) 1

Resource block (RB) 2

Resource block (RB) 3

First phase tracking reference signal

| | | | |
|---|---|---|---|
| RE 0 | | 0/1/8/9 | 8 |
| RE 1 | | 2/3/10/11 | 10 |
| RE 2 | | 0/1/8/9 | 9 |
| RE 3 | | 2/3/10/11 | 11 |
| RE 4 | | 0/1/8/9 | |
| RE 5 | | 2/3/10/11 | |
| RE 6 | | 0/1/8/9 | |
| RE 7 | | 2/3/10/11 | |
| RE 8 | | 0/1/8/9 | |
| RE 9 | | 2/3/10/11 | |
| RE 10 | | 0/1/8/9 | |
| RE 11 | | 2/3/10/11 | |

Resource block (RB) 4

FIG. 7C

Resource element offset indication information offset 00

| Resource block (RB) 0 | | |
|---|---|---|
| RE 0 | 0/1/8/9 | 8 |
| RE 1 | 2/3/10/11 | 10 |
| RE 2 | 0/1/8/9 | 9 |
| RE 3 | 2/3/10/11 | 11 |
| RE 4 | 0/1/8/9 | |
| RE 5 | 2/3/10/11 | |
| RE 6 | 0/1/8/9 | |
| RE 7 | 2/3/10/11 | |
| RE 8 | 0/1/8/9 | |
| RE 9 | 2/3/10/11 | |
| RE 10 | 0/1/8/9 | |
| RE 11 | 2/3/10/11 | |

First phase tracking reference signal

Resource block (RB) 1

Resource block (RB) 2

Resource block (RB) 3

Resource block (RB) 4

| | | |
|---|---|---|
| RE 0 | 0/1/8/9 | 8 |
| RE 1 | 2/3/10/11 | 10 |
| RE 2 | 0/1/8/9 | 9 |
| RE 3 | 2/3/10/11 | 11 |
| RE 4 | 0/1/8/9 | |
| RE 5 | 2/3/10/11 | |
| RE 6 | 0/1/8/9 | |
| RE 7 | 2/3/10/11 | |
| RE 8 | 0/1/8/9 | |
| RE 9 | 2/3/10/11 | |
| RE 10 | 0/1/8/9 | |
| RE 11 | 2/3/10/11 | |

First phase tracking reference signal

Resource block (RB) 5

FIG. 7D

800

Communication apparatus

Transceiver module 801

Processing module 802

FIG. 8

900

Communication apparatus

Transceiver module 901

Processing module 902

FIG. 9

1000

Processor 1010

Transceiver 1030

Memory 1020

FIG. 10

1100

Communication
apparatus

1110

Processor

1130

Transceiver

1133

Transmitter
machine

1131

1132

Receiver
machine

1120

Memory

Computer
program code

FIG. 11

1233

1200

Communication
apparatus

1230

Transceiver

1210

Processor

Transmitter
machine

1231

1232

Receiver
machine

1220

Memory

Computer
program code

FIG. 12

## INTERNATIONAL SEARCH REPORT

| International application No. |
|---|
| **PCT/CN2023/121624** |

### A. CLASSIFICATION OF SUBJECT MATTER

H04W72/00(2023.01)i;  H04W72/04(2023.01)i

According to International Patent Classification (IPC) or to both national classification and IPC

### B. FIELDS SEARCHED

Minimum documentation searched (classification system followed by classification symbols)

IPC:H04W72/-

Documentation searched other than minimum documentation to the extent that such documents are included in the fields searched

Electronic data base consulted during the international search (name of data base and, where practicable, search terms used)

3GPP, CNTXT, ENTXT, ENTXTC, VEN, WPABSC, CNKI: 编号, 端口, 解调参考信号, 密度, 偏移, 相位跟踪参考信号, 资源单元, 资源块, 子载波, DMRS, mod, offset, port, PTRS, RB, RE, RNTI, SC

### C. DOCUMENTS CONSIDERED TO BE RELEVANT

| Category* | Citation of document, with indication, where appropriate, of the relevant passages | Relevant to claim No. |
|---|---|---|
| X | CN 111092711 A (ZTE CORP.) 01 May 2020 (2020-05-01) description, paragraphs 162-529 | 1-23 |
| A | CN 109802796 A (HUAWEI TECHNOLOGIES CO., LTD.) 24 May 2019 (2019-05-24) entire document | 1-23 |
| A | CN 111213414 A (LENOVO (BEIJING) CO., LTD.) 29 May 2020 (2020-05-29) entire document | 1-23 |
| A | CN 109478993 A (LG ELECTRONICS INC.) 15 March 2019 (2019-03-15) entire document | 1-23 |
| A | LENOVO et al. ""R1-1800394"" *3GPP tsg_ran\WG1_RL1*, 12 January 2018 (2018-01-12), entire document | 1-23 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **01 January 2024** | **03 January 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

# EP 4 593 483 A1

## INTERNATIONAL SEARCH REPORT
### Information on patent family members

International application No.

**PCT/CN2023/121624**

| Patent document cited in search report | | | Publication date (day/month/year) | Patent family member(s) | | | Publication date (day/month/year) |
|---|---|---|---|---|---|---|---|
| CN | 111092711 | A | 01 May 2020 | WO | 2021088917 | A1 | 14 May 2021 |
| | | | | EP | 4057556 | A1 | 14 September 2022 |
| | | | | EP | 4057556 | A4 | 06 December 2023 |
| | | | | US | 2022407651 | A1 | 22 December 2022 |
| | | | | BR | 112022008805 | A2 | 26 July 2022 |
| CN | 109802796 | A | 24 May 2019 | US | 2020220750 | A1 | 09 July 2020 |
| | | | | US | 10972320 | B2 | 06 April 2021 |
| | | | | CA | 3047351 | A1 | 23 May 2019 |
| | | | | NZ | 765119 | A | 25 February 2022 |
| | | | | US | 2019296946 | A1 | 26 September 2019 |
| | | | | US | 10637691 | B2 | 28 April 2020 |
| | | | | KR | 20190089207 | A | 30 July 2019 |
| | | | | EP | 3557811 | A1 | 23 October 2019 |
| | | | | EP | 3557811 | A4 | 19 February 2020 |
| | | | | EP | 3557811 | B1 | 20 July 2022 |
| | | | | BR | 112019012656 | A2 | 14 July 2020 |
| | | | | BR | 112019012656 | B1 | 17 August 2021 |
| | | | | KR | 20210127826 | A | 22 October 2021 |
| | | | | KR | 102500816 | B1 | 16 February 2023 |
| | | | | EP | 4123945 | A1 | 25 January 2023 |
| | | | | JP | 2020511814 | A | 16 April 2020 |
| | | | | JP | 6928662 | B2 | 01 September 2021 |
| | | | | ES | 2925213 | T3 | 14 October 2022 |
| | | | | WO | 2019095828 | A1 | 23 May 2019 |
| CN | 111213414 | A | 29 May 2020 | US | 2023069962 | A1 | 09 March 2023 |
| | | | | WO | 2019028851 | A1 | 14 February 2019 |
| | | | | US | 2020244415 | A1 | 30 July 2020 |
| | | | | US | 11601240 | B2 | 07 March 2023 |
| | | | | EP | 3665987 | A1 | 17 June 2020 |
| | | | | EP | 3665987 | A4 | 23 June 2021 |
| CN | 109478993 | A | 15 March 2019 | KR | 20180135858 | A | 21 December 2018 |
| | | | | KR | 101980715 | B1 | 21 May 2019 |
| | | | | US | 2020220675 | A1 | 09 July 2020 |
| | | | | US | 10924235 | B2 | 16 February 2021 |
| | | | | SG | 11201900091 | RA | 27 February 2019 |
| | | | | WO | 2018182248 | A1 | 04 October 2018 |
| | | | | KR | 20190049942 | A | 09 May 2019 |
| | | | | KR | 102014805 | B1 | 27 August 2019 |
| | | | | JP | 2020502904 | A | 23 January 2020 |
| | | | | JP | 6861280 | B2 | 21 April 2021 |
| | | | | EP | 3480993 | A1 | 08 May 2019 |
| | | | | EP | 3480993 | A4 | 15 July 2020 |
| | | | | BR | 112019009259 | A2 | 16 July 2019 |
| | | | | BR | 112019009259 | A8 | 06 December 2022 |
| | | | | BR | 112019009259 | B1 | 14 February 2023 |
| | | | | MX | 2019002549 | A | 17 June 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211214461X